Europäisches Patentamt

European Patent Office

Office européen des brevets

(11) Veröffentlichungsnummer: **0 169 501**
**A2**

# (12) EUROPÄISCHE PATENTANMELDUNG

(21) Anmeldenummer: **85108968.0**

(22) Anmeldetag: **18.07.85**

(51) Int. Cl.⁴: **C 09 J 3/00**
**B 65 D 83/00**

(30) Priorität: **27.07.84 DE 3427728**
**27.07.84 DE 3427727**
**06.08.84 DE 3428915**
**21.12.84 DE 3446697**
**22.06.85 DE 3522363**

(43) Veröffentlichungstag der Anmeldung:
**29.01.86 Patentblatt 86/5**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Ritter, Wolfgang, Dr.**
**Hochdahler Strasse 32**
**D-4010 Hilden(DE)**

(72) Erfinder: **Wilk, Hans-Christof, Dr.**
**An der Obererft 94**
**D-4040 Neuss(DE)**

(72) Erfinder: **Handwerk, Hans-Peter**
**Boschstrasse 57**
**D-4000 Düsseldorf(DE)**

(72) Erfinder: **Dierichs, Wolfgang, Dr.**
**Im Diepental 11**
**D-4000 Düsseldorf 13(DE)**

(72) Erfinder: **Schenck, Günter, Dr.**
**Am Bühl 49**
**D-4330 Mülheim/Ruhr(DE)**

(72) Erfinder: **Fues, Johann Friedrich, Dr.**
**Otto Hahn Strasse 157**
**D-4000 Düsseldorf(DE)**

(54) Gebrauchsfertige Klebstoffgebinde.

(57) Die Erfindung betrifft neue gebrauchsfertige Klebstoffgebinde, die durch die Kombination der folgenden Merkmale gekennzeichnet sind:

a) Klebstoffe auf Basis salbenartig-pastös eingedickter, weich verstreichbarer, ohne Druckanwendung jedoch nicht fließender Emulsionspolymerisate, die ein mit Schutzkolloiden beziehungsweise Eindickungsmitteln stabilisiertes Homo- und/oder Copolymeres mit Klebstoffcharakter als dispersen Festkörper in wäßriger Phase enthalten, liegen

b) in mit einer Hand greifbaren Behältern mit einer Abgabeöffnung für den Klebstoff und einer Einrichtung zur dosierten Klebstoffabgabe vor, wobei

c) eine den mit Klebstoff gefüllten Innenraum des Behälters entsprechend der Abgabe des Klebstoffes derart verringernde Einrichtung vorgesehen ist, daß die im Behälter verbleibende Klebstoffmasse stets hohlraumfrei und gegen Luftrücktritt gesichert gelagert ist.

Die bevorzugten Klebstoffe sind stabilisierte wäßrige Emulsionspolymerisate mit Viskositäten (Brookfield RTV, 20 °C und 20 Upm) von wenigstens 15.000 mPas und insbesondere im Bereich von 50.000 bis 500.000 mPas und enthalten als Eindickungsmittel praktisch unbegrenzter Lagerstabilität Polyethylenglykol oder Mischpolyether aus Ethylenoxid und Propylenoxid eines mittleren Molekulargewichts von wenigstens 3.000.

./...

*FIG. 4*

Patentanmeldung

Henkelstraße 67

4000 Düsseldorf, den 5.7.1985

0169501
HENKEL KGaA
ZR-FE/Patente

HF/Rs/Po

Europäische Patentanmeldung
D 7142/45/50/7251/7336 EP

## Gebrauchsfertige Klebstoffgebinde

Der Stand der Technik kennt zahllose Vorschläge zu Klebstoffen und leicht handhabbaren Klebstoffgebinden, die insbesondere in der Praxis der Alltages in Büro oder Haus, aber auch im handwerklichen Bereich zu gewerblichen Zwecken oder im do-it-yourself-Bereich Verwendung finden.

Besonders wichtig sind fließfähige gelöste und/oder emulgierte bzw. dispergierte Klebmittel. Bekannt sind hier flüssige Kleber auf Basis von Lösungen eines hochmolekularen Klebmittels in Lösungsmitteln bzw. selbstfließende Kunststoffdispersionen bzw.-emulsionen, die das Polymere mit Klebstoffcharakter als disperse Phase in einer geschlossenen Flüssigphase aufweisen. Diese Dispersions- bzw. Emulsionsklebstoffe können dabei auf wäßriger Basis aufgebaut sein. Ihre Gebrauchsfähigkeit bei längerer Lagerung und nur gelegentlicher portionierter Abgabe beschränkter Mengen beruht vor allem auf der Fähigkeit dieser fließfähigen Produkte zur selbsttätigen Rückvermischung des Behälterinhalts, sodaß durch die in den geöffneten Behälter zurücktretende Luft keine gebrauchshindernde Antrocknung stattfindet.

Salbenartig steif-pastöse, weich verstreichbare Klebstoffe auf Naturstoffbasis, insbesondere Dextrin- und Stärkekleister haben jahrzehntelange Bedeutung bei der Verklebung von Papier und Pappe gehabt. Ihre praktische Anwendung ist jedoch mit einer Reihe von Schwierigkeiten behaftet: Die Klebkraft ist

. . .

beschränkt, die Applikation des salbenartig pastösen Klebstoffs erfordert beide Hände, da der Klebstoff aus seinem zugehörigen Gebinde mit einem geeigneten Werkzeug entnommen und auf das zu verklebende Werkstück aufgetragen werden muß. Die Lagerung dieser salbenartig pastösen Klebstoffe erfolgt üblicherweise in Blech- oder Kunststoffbehältern mit abnehmbarem Deckel. Daher tritt unerwünscht rasch ein Antrocknen der salbenartig pastösen Klebstoffmasse im Vorratsbehälter statt.

Diese salbenartigen Klebstoffe haben daher in der Praxis nicht den Platz gefunden, der ihnen aufgrund ihrer insgesamt vorteilhaften Eigenschaften zukommen könnte: Der salbenartig cremige Klebstoff ermöglicht die optimale Anpassung des feuchten Klebmittels an den zu benetzenden Untergrund, ohne daß ein Übermaß an Flüssigphase erforderlich wäre, mit dem unerwünschtes Durchfeuchten des bestrichenen Materials verbunden sein kann. Die weich verstreichbare Beschaffenheit dieser salbenartigen Klebstoffe macht ihre Anwendung auch bei räumlich diffiziler Aplikation möglich. Für Klebstoffe dieser Art auf Basis wäßriger Emulsionen bzw. Dispersionen ergibt sich die Möglichkeit, die Klebeeigenschaften durch Auswahl des dispersen Polymeren zu variieren und zu steuern. Solche salbenartig pastösen Klebstoffmassen zeichnen sich schließlich aber auch dadurch aus, daß sie nicht fadenziehend sind. Versehentlich verschmierte oder falsch aufgetragene Anteile der pastösen Klebstoffmasse lassen sich vor dem Auftrocknen leicht abwischen, ohne daß Reste der Klebstoffmasse zurückbleiben, die das weitere Arbeiten behindern.

Die Erfindung geht von der Aufgabe aus, weich verstreichbare Klebstoffmassen dieser Art in Form eines gebrauchsfertigen leicht handhabbaren Klebstoffgebindes zur Verfügung zu stellen, das insbesondere als Einhand- Klebstoffgebinde Verwendung finden kann. Die Erfindung will insbesondere die Vorteile nutzen, die Klebstoffe auf Basis von Emulsions- bzw.

. . .

Suspensionspolymerisaten besitzen, ohne an die physikalische Zustandsform selbst fließender Massen gebunden zu sein. Weiterhin gestellte Anforderungen sind praktisch unbegrenzte Lagerfähigkeit des Klebstoffgebindes, unproblematisches Öffnen und Verschließen des Behälters zur und nach der Entnahme, problemlose Entnahme und Applikation genau bestimmbarer Klebstoffmengen, sowie freie Einstellbarkeit der im jeweiligen Einzelfall geforderten Klebstoffwirkung durch optimale Freiheit in der speziellen Ausgestaltung der jeweils eingesetzten salbenartig pastösen Klebstoffkompositionen.

Gemäß der Erfindung wird diese Aufgabe durch Kombination der folgenden Merkmale gelöst:

a)  ein Klebstoff auf der Basis salbenartig-pastös eingedickter, weich verstreichbarer, ohne Druckanwendung jedoch nicht fließender Emulsionspolymerisate, die ein mit Schutzkolloiden bzw. Eindickungsmitteln stabilisiertes Homo- und/oder Copolymeres mit Klebstoff- charakter als dispersen Festkörper in wäßriger Phase enthalten,

b)  ein den Klebstoff aufnehmender, mit einer Hand greifbarer Behälter mit einer Abgabeöffnung für den Klebstoff und einer Einrichtung zur dosierten Klebstoffabgabe, sowie

c)  eine den mit Klebstoff gefüllten Innenraum des Behälters entsprechend der Abgabe des Klebstoffes derart verringernde Einrichtung, daß die im Behälter verbleibende Klebstoffmasse hohlraumfrei und gegen Luftrücktritt gesichert gelagert ist.

In einer bevorzugten Ausführungsform wird gemäß der Erfindung die Kombination der folgenden Merkmale vorgeschlagen:

. . .

a)  ein Klebstoff auf der Basis salbenartig-pastös eingestellter, weich verstreichbarer, ohne Druckanwendung
jedoch nicht fließender Emulsionspolymerisate, die ein
mit eindickenden Schutzkolloiden stabilisiertes Homo-
und/oder Copolymeres mit Klebstoffcharakter als
dispersen Festkörper in wäßriger Phase enthalten,

b)  ein den Klebstoff aufnehmendes, mit einer Hand greifbares Griffstück,

c)  eine mittels der Greifhand betätigbare Dosiervorrichtung
am Kopf des Griffstücks mit Abgabeöffnung für den
Klebstoff,

d)  ein Verteilerelement zur verstreichenden Aufbringung
des die Abgabeöffnung verlassenden Klebestoffes auf
eine zu verklebende Fläche,

e)  eine den zur Aufnahme des Klebstoffes dienenden
Hohlraum im Griffstück entsprechend der Abgabe des
Klebstoffes selbsttätig derart verringernde Einrichtung,
daß die Klebstoffmasse stets hohlraumfrei im Griffstück
gelagert ist.

Die Klebstoffe sind stabilisierte wäßrige Emulsionspolymerisate
von Homo- und/oder Copolymeren mit Klebstoffcharakter, die
durch Wahl des Feststoffgehaltes und/oder durch geeigneten
Zusatz von Verdickungsmitteln auf so hohe Viskositäten eingestellt sind, daß der gewünschte salbenartige pastöse, gleichzeitig
jedoch weich verstreichbare Zustand des Stoffgemisches vorliegt.
Für die Erfindung geeignete Wirkstoffgemische auf Basis
wäßriger Emulsionspolymerisate besitzen insbesondere Viskositäten von wenigstens etwa 15 000 mPas (Brookfield RTV, $20^0$
C und 20 UpM). Insbesondere liegt die entsprechend bestimmte
Brookfield-Viskosität dieser Emulsionspolymerisate bei wenigstens
50 000 mPas, wobei die besonders bevorzugten Stoffgemische als
Untergrenze Viskositätswerte von wenigstens etwa 80 000-100 000
mPas aufweisen. Die Obergrenze für die Viskosität der erfindungsgemäß eingesetzten Klebstoffmassen liegt bei etwa 3

. . .

Millionen mPas - bestimmt unter vergleichbaren Bedingungen, vorzugsweise liegt die Viskosität unter 1 Mio. mPas. Besonders geeignet kann ein Bereich von etwa 50 000 bis 500 000 mPas sein, wobei häufig besonders geeignete Mischungen im Bereich von etwa 80 000 bis 200 000 mPas (bestimmt bei 20° C und 20 UpM) liegen können.

Gegenüber den auf dem Klebstoffgebiet bisher üblichen fließfähigen Dispersionen bzw. Emulsionen von Polymeren mit Klebstoffcharakter liegt hier eine deutliche Abgrenzung vor. Fließfähige Dispersionsklebstoffe der Praxis liegen beispielsweise im Bereich bis maximal 10 000 bis 12 000 mPas - bestimmt unter den vorher angegebenen Bedingungen.

Kern der Erfindung ist damit die neuartige Kombination bestimmt ausgewählter salbenartig-pastös eingestellter, nicht freifließender Emulsionspolymerisate der angebenen Art mit einem Behälter, der die dosierte Klebstoffabgabe ermöglicht, gleichzeitig aber so ausgestaltet ist, das sich sein mit Klebstoff erfüllter Innenraum entsprechend der Abgabe des Klebstoffes verringert und damit den Rücktritt bzw. Zutritt von Luft in das Behälterinnere ausschließt. In der geschilderten bevorzugten Ausführungsform der Erfinderung werden als neuartige Kombination bestimmt ausgewählter salbenartig-pastös eingestellte nicht freifließende Emulsionspolymerisate in einem mittels einer Greifhand betätigbaren Spender angeboten, der gleichzeitig als Verpackung und Auftragsmittel für den salbenartigen Klebstoff wirkt.

Der Einsatz von pastösen Massen in Gebinden der beschriebenen Art und insbesondere in Spendern, die mit der Greifhand betätigt werden können ist auf einer Mehrzahl technischer Gebiete bekannt, nicht jedoch für das Gbiet der hier betroffenen salbenartig-pastösen, nicht freifließenden Klebstoffe auf Basis von wäßrigen Emulsionspolymerisaten. Die Lehre der Erfindung beruht auf der Feststellung, daß unter bestimmten

. . .

Voraussetzungen auch beim Einsatz der nicht freifließenden salbenartig-pastösen Emulsionspolymerisate für praktisch in Betracht kommende Zeiträume die Lagerstabilität und die beliebig häufig wiederholte Gebrauchsfähigkeit des Klebstoffgebindes gewährleistet sind. Das war nicht zu erwarten. Klebstoffe auf Basis von Emulsionspolymerisaten sind in ihren hier relevanten Eigenschaften anderen pastösen Massen – z.B. aus dem kosmetischen Bereich – nicht vergleichbar.

Salbenförmige Emulsionskleber der betroffenen Art neigen unter Luftzutritt zu rascher Ausbildung einer Oberflächenpolymerhaut. Dieses angetrocknete Polymere ist letztlich der gewünschte Kleber. Während in den bekannten Gebinden für Kleber auf Basis freifließender wäßriger Emulsionspolymerisate durch Rückvermischung des gesamten Behälterinhalts mit gegebenenfalls angetrockneten Anteilen erwartungsgemäß Störeffekte verhindert oder zumindest gemildert werden, scheidet bei salbenartig pastösen nicht freifließenden Massen der erfindungsgemäß eingesetzten Art eine solche Regeneration durch Rückvermischung aus. Tatsächlich war mit einer rasch eintretenden Funktionsunfähigkeit der Klebstoffgebinde durch Verklebung wichtiger Gebindeteile zu rechnen. Überraschenderweise bleibt bei Einhaltung der erfindungsgemäßen Bedingungen die Funktionsfähigkeit der Klebstoffgebinde jedoch über praktisch beliebige Zeiträume voll erhalten.

Eine weitere Schwierigkeit für wäßrige Emulsionspolymerisate der hier betroffenen Art liegt in ihrer möglichen Alterung unter gleichzeitiger Viskositätserhöhung auch unter vollständigem Ausschluß von Luftzutritt. Während sich diese Erscheinung bei vergleichsweise dünnflüssigen selbstfließenden Emulionspolymerisaten nicht oder nicht wesentlich bemerkbar macht, kann ihr Auftreten in salbenartig pastösen Massen schon nach kurzer Zeit zur Gebrauchsunfähigkeit des Klebstoffgebindes führen. Durch Auswahl von Massen vorbestimmter Rheologie – bestimmt an den

. . .

zahlenmäßig genannten Viskositätswerten – sowie insbesondere auch durch die im folgenden noch geschilderte Auswahl ausgewählter Eindickungsmittel werden Störungen aus dieser Quelle unterbunden.

Im folgenden werden zunächst die erfindungsgemäß einzusetzenden salbenartig steifpastösen Klebstoffe geschildert. Die Klebstoffmasse auf Basis wäßriger Emulsionspolymerisate besitzt in der bevorzugten Ausführungsform die folgende Grundzusammensetzung:

Polymerfestkörper ca. 20 – 70 Gew.-%
Eindickungsmittel bzw. Schutzkolloid 0,5 – 15 Gew.-%
Emulgatoren 0 – 5 Gew.-%
zum Rest Wasser, wobei der Wassergehalt üblicherweise im Bereich von 30 – 75 Gew.-% liegen kann.

Neben den hier genannten Komponenten können die Klebstoffmassen weitere Hilfsstoffe enthalten. Geeignete Hilfstoffe sind beispielsweise Tixotropierungsmittel, wassermischbare schwer flüchtige Lösungsmittel bzw. Feuchthaltemittel, Konservierungsmittel, Weichmacher, pH-Regulatoren, Entschäumer, Filmbildehilfsmittel und dergleichen.

In den bevorzugten Ausführungsformen beträgt der Gehalt an Polymerfestkörper mit Klebstoffcharakter im salbenartigen Klebstoff 35 – 60 Gew.-% und insbesondere 40 – 60 Gew.-%. Der bevorzugte Gehalt an Eindickungsmittel liegt üblicherweise im Bereich von 2 – 12 Gew.-% und kann insbesondere 3 – 10 Gew.-% ausmachen. Die Mitverwendung von Emulgatoren im angegebenen Bereich ist bevorzugt. Feuchthaltemittel und/oder wassermischbare schwer flüchtige Lösungsmittel, Konservierungsmittel und dergleichen können in beschränkten Mengen eingesetzt werden, wobei die Obergrenze für den jeweiligen Bestandteil üblicherweise

. . .

bei etwa 15 - 20 Gew.-% liegt, insgesamt es aber bevorzugt ist, daß alle diese zusätzlichen Hilfsstoffe nicht mehr als 20 - 25 Gew.-% des Gesamtgemisches ausmachen. Besondere Bedeutung kann der Mitverwendung begrenzter Mengen an Feuchthaltemittel zukommen, wobei hier wassermischbare feste als auch flüssige organische Komponenten in Betracht kommen können. Die Mengen dieser Komponenten liegen insbesondere im Bereich von 0,5 - 10 Gew.-%, bezogen auf das Gesamtgemisch.

Als Polymere mit Klebstoff-Charakter kommen alle Homo- und/oder Copolymerisate mit entsprechender Charakteristik in Betracht, die auf dem Wege der Emulsionspolymerisation und insbesondere auf diesem Wege in wäßriger Phase hergestellt werden können. Der Stand der Technik kennt hier zahlreiche Typen von Polymerkomponenten, deren Verwendung dementsprechend in den Rahmen der Erfindung fällt. Besondere Bedeutung kommt Homo- und/oder Copolymerisaten von Vinylestern, Acrylsäure und/oder Methacrylsäure beziehungsweise deren Derivaten, insbesondere deren Estern und entsprechenden Homo- und/oder Copolymerisaten von Diolefinen wie Chloropren, Butadien, Isopren und dergleichen zu. Geeignet können insbesondere aber auch ausgewählte Styrolhomo- und/oder Copolymerisate sein.

Besonders wichtige Klebstoffe für die Verklebung von Cellulosematerialien, insbesondere Papier, Pappe und/oder Holz sind solche auf Basis von Homo- und/oder Copolymerisaten von Vinylestern, insbesondere Vinylacetat. Geeignete Copolymerisate des Vinylacetats können beispielsweise ein oder mehrere Comonomere aus der Gruppe der alpha-Olefine, insbesondere Ethylen, Maleinsäure beziehungsweise Maleinsäurederivate, wie das entsprechende Anhydrid, Halbester oder Ester der Maleinsäure, Crotonsäure, Acrylsäure beziehungsweise Methacrylsäure oder deren Salze, Ester oder Nitrile, Vinylalkylether, deren Alkylgruppe 1 bis 12, vorzugsweise 1 bis 4 C-Atome aufweist, Styrol oder N-Vinylpyrrolidon enthalten.

Besonders geeignete Vinylester-Copolymerisate enthalten den Vinylesterbestandteil - insbesondere Vinylacetat - in Mengen von wenigstens etwa 40 mol-%, vorzugsweise in Mengen von wenigstens etwa 50 mol-%.

Eine andere besonders geeignete Gruppe von Polymeren mit Klebstoff-Charakter sind für die Zwecke der Erfindung entsprechende Homo- und/oder Copolymerisate der Acrylsäure und/oder Methacrylsäure bzw. ihrer Derivate. Als Derivate der hier genannten Säuren kommen insbesondere ihre Ester, Amide und/oder Nitrile in Betracht. Als Comonomere sind die zuvor bei Polymeren auf Basis von Vinylacetat genannten Verbindungen geeignet. Styrol und/oder Maleinsäure bzw. Maleinsäurederivate können besonders geeignet sein. Durch Variation des Comonomeren und seiner gegebenenfalls vorliegenden funktionellen Gruppen können hier wie im zuvor genannten Fall der Vinylester-Copolymerisate starke Variationen bezüglich des Klebstoffverhaltens der fertigen Masse eingestellt werden. Im einzelnen gilt hier das einschlägige Wissen des Standes der Technik.

Besonders interessante Polymermassen mit Klebstoffcharakter sind Homo- und/oder Copolymerisate auf Basis der zuvor genannten Diolefine, insbesondere auf Basis von Chloropren.

Die Emulsionspolymerisation der genannten Monomeren beziehungsweise Monomergemische zum Emulsionspolymerisat erfolgt in an sich bekannte Weise, verwiesen sei hier beispielsweise auf Ullmans Encyclopädie der technischen Chemie, 4. Auflage, Band 19, 132 bis 145.

Zur Stabilisierung der Emulsionspolymerisate und insbesondere auch zur Eindickung der Klebstoffmassen auf die gewünschte salbenartige Konsistenz werden vor allen Dingen Schutzkolloide beziehungsweise Eindickungsmittel in kleineren oder größeren

. . .

Mengen mitverwendet. Diese Komponenten können bereits während der Emulsionspolymerisation im Reaktionsgemisch anwesend sein, es ist aber auch möglich, sie wenigstens anteilsweise nach der Emulsionspolymerisation dem fertigen Reaktionsprodukt zur weiteren Stabilisierung und/oder Eindickung zuzusetzen.

Geeignete Schutzkolloide beziehungsweise Eindickungsmittel können natürlichen Ursprungs sein, insbesondere haben aber entsprechende Komponenten auf Basis synthetischer Hochpolymerer Bedeutung. Geeignete Verbindungen sind beispielsweise wasserlösliche und/oder wasserquellbare Polymerverbindungen wie Hydroxyalkyl- und/oder Carboxyalkylcellulosen, Homo- und/oder Copolymere von Acrylamid beziehungsweise Acrylamidderivaten, Copolymere von Methylvinylether und Maleinsäureanhydrid und Polyvinylalkohol.

In einer besonders bevorzugten Ausführungsform der Erfindung wird durch Einsatz ausgewählter Eindickungsmittel beziehungsweise Schutzkolloide eine Optimierung wichtiger Eigenschaften der Klebstoffmasse erzielt. Insbesondere gelingt es auf diese Weise besonders glatt und weich verstreichbare Polymermassen herzustellen, die sich durch extreme Lagerbeständigkeit auch unter den erschwerten Bedingungen erhöhter Temperatur auszeichnen. Für die praktische Anwendung sind damit Klebstoffmassen besonders bevorzugt, die unter Berücksichtigung der nachfolgenden Angaben ausgestaltet sind.

Die Lehre der Erfindung geht hier von der Zielsetzung aus, eine Optimierung des Verhaltens im Verstreichvorgang mit optimaler Lagerfähigkeit der salbenförmig-pastösen Masse selbst unter verschärften Testbedingungen und unter Erhalt der guten Verstreicheigenschaften zu verbinden. Im Gebiet der gewünschten Pastenkonsistenz kann dieses Anforderungsprofil dann besonders vorteilhaft eingestellt werden, wenn Polyethylenglykole eines ausgesuchten mittleren Molekulargewichts als eindickendes Mittel

. . .

zur Anwendung kommen. Diese Polyethylenglykole können dabei als alleiniges Eindickungsmittel dienen, wenigstens sind sie aber immer in nicht unbeträchtlichen Mengen vorhanden.

Gegenstand dieser Ausgestaltung der Erfindung ist dementsprechend die Verwendung von Polyethylenglykolen eines mittleren Molekulargewichts von wenigstens 3000 als lagerstabiles, nicht nachdickendes Eindickungsmittel in wäßrigen Emulsionspolymerisaten mit Klebstoff-Charakter und nicht freifließender pastöser Salbenkonsistenz. Bevorzugt liegt das mittlere Molekulargewicht der eingesetzten Polyethylenglykole bei wenigstens etwa 5000 und insbesondere bei wenigstens etwa 10 000. Als praktische Obergrenze für das mittlere Molekulargewicht dieser Polyethylenglykole ist der Wert von etwa 35 000 zu nennen, wobei solche Polyethylenglykole eines mittleren Molekulargewichts des Bereichs von etwa 12 000 bis 20 000 besonders geeignet sind. Höhere Molekulargewichte beispielsweise bis zu etwa 50 000 sind allerdings nicht ausgeschlossen. Unter die erfindungsgemäße Definition der "Polyethylenglykole" fallen in erster Linie Homopolymere des Ethylenglykols beziehungsweise des Ethylenoxids. Dieser Begriff erfaßt jedoch auch Copolymere, die zu überwiegendem Anteil, vorzugsweise nicht weniger als etwa 50 mol-% Ethylenoxidreste zusammen mit Propylenoxidresten aufweisen. Hier sind dann entsprechende Blockcopolymere besonders bevorzugt.

Die unter Mitverwendung von Polyethylenglykolen der hier definierten Art hergestellten salbenförmig-pastösen wäßrigen Emulsionspolymerisate zeigen unmittelbar nach ihrer Herstellung eine optimierte Ausgewogenheit von physikalischen Eigenschaften. Die salbenförmigen Massen zeigen gelartige Beschaffenheit mit der gewünschten Formstabilität ohne äußere Krafteinwirkung, im Verstreichen sind sie gleichwohl besonders glatt und leicht verteilbar. Von besonderer Bedeutung ist, daß Klebstoffe auf Basis der hier definierten Eindickungsmittel durch extreme

. . .

Lagerstabilität auch unter verschärften Lagerbedingungen gekennzeichnet sind. So führt beispielsweise die Lagerung entsprechend eingedickter wäßriger Emulsionspolymerisate in handelsüblichen Spendern bei 40 $^{o}$C für einen Zeitraum von wenigstens 6 Monaten zu keiner sichtbaren Veränderung der physikalischen Beschaffenheit des Klebstoffgeles. Dieses Ergebnis ist als überraschend zu bewerten. Handelsübliche Spender, wie sie heute beispielsweise für Zahnpasten auf dem Markt sind, sind ja keineswegs fest verschlossene Packungen. Sie besitzen nicht nur die Abgabeöffnung für den Behälterinhalt, auch der bei dem Ausdrücken des Behälterinhalts selbsttätig nachwandernde Boden führt zur Ausbildung einer Mikrofuge in der Behälterwandung. Es war nicht vorherzusehen, daß eine Lagerung von 6 Monaten und mehr unter den verschärften Temperaturbedingungen ohne jeden Einfluß auf die physikalische Beschaffenheit des im Behälter abgepackten salbenförmigen Klebstoffmaterials ist. Tatsächlich zeigen andere Eindickungsmittel beispielsweise solche auf Basis von Cellulose-Derivaten oder auch Polyvinylalkohol und Polyvinylalkoholabkömmlinge unter derart extremen Lagerbedingungen Auswirkungen, die in der Regel in einem mehr oder weniger starken Nachdicken des Behälterinhalts bestehen. In Extremfällen kann dieses Nachdicken so weit fortschreiten, daß das Verstreichen des ausgedrückten Klebstoffs oder sogar seine portionierte Abgabe behindert werden. Die unter Mitverwendung der erfindungsgemäß definierten Polyethylenglykole eingedickten wäßrigen Emulsionspolymerisate zeigen diese unerwünschten Erscheinungen nicht.

Die Polyethylenglykole liegen in den wäßrigen Emulsionspolymerisaten erfindungsgemäß vorzugsweise in Mengen von wenigstens etwa 3 Gewichtsprozent und insbesondere in Mengen von etwa 3 bis 10 Gewichtsprozent - jeweils auf das Emulsionsgesamtgewicht bezogen - vor. Wie angegeben, können sie allein eingesetzt sein. Möglich ist aber auch ihre Abmischung mit

. . .

anderen an sich üblichen Schutzkolloiden mit oder ohne Eindickungswirkung.

Besondere Bedeutung kann hier der Mitverwendung von Polyvinylalkohol zukommen. Hierdurch kann Einfluß auf eine erhöhte
Klebkraft der Klebemittel genommen werden, insbesondere wenn
Polyvinylacetat und/oder seine Copolymere als Polymerkörper mit
Klebstoff-Charakter vorliegt. In der zuletzt geschilderten
Ausführungsform werden allerdings bevorzugt wenigstens etwa
gleiche Mengen an Polyethylenglykol und Polyvinylalkohol
eingesetzt, zweckmäßigerweise liegt ein mengenmäßiger Überschuß an Polyethylenglykol vor. Geeignet sind beispielsweise als
Schutzkolloid beziehungsweise Eindickungsmittel in dieser
Ausführungsform Mengenverhältnisse von Polyethylenglykol zu
Polyvinylalkohol, die im Bereich von etwa 1 bis 2 Gewichtsteilen
Polyethylenglykol auf jeweils 1 Gewichtsteil Polyvinylalkohol
liegen. Als Polyvinylalkohol eignet sich insbesondere ein
entsprechendes Material einer Viskosität im Bereich von etwa
20 000 bis 60 000 mPas – bestimmt in 4 gewichtsprozentiger
wäßriger Lösung bei 20 $^O$C.

Neben den Schutzkolloiden werden im allgemeinen begrenzte
Mengen an Emulgatoren bei der Herstellung und/oder Stabilisierung der Emulsionspolymerisate eingesetzt. So liegen die
Eindickungsmittel auf Polyethylenglykolbasis üblicherweise
zusammen mit geringen Mengen an Emulgatoren vor, die im Bereich von 0 bis 1 Gewichtsprozent zugegen sein können.

Geeignet sind hier insbesondere anionische oder nichtionische
Polymerisationsemulgatoren oder deren Mischungen. So können
beispielsweise Sulfate beziehungsweise Sulfonate von langkettigen
Alkoholen oder Alkylphenolen eingesetzt werden, weiterhin
Alkylbenzolsulfonate oder Sulfosuccinate. Geeignet sind auch die
Sulfate der Umsetzungsprodukte von Ethylenoxid mit (Fett)alkoholen oder Alkylphenolen, wobei die Grundkörper bevorzugte

. . .

Sd 230/438529  4 04 83

nichtionische Emulgatoren sind. Weitere nichtionische Emulgatoren sind Sorbitanester langkettiger Fettsäuren, ethoxilierte Sorbitanester langkettiger Fettsäuren sowie Alkylglyceride.

Zu den gegebenenfalls mitzuverwendenden Emulgatoren gelten die weiteren folgenden Angaben: Während sich die Schutzkolloide im allgemeinen durch ihre hochmolekulare Struktur auszeichnen, sind die Emulgatoren vergleichsweise niedrigmolekulare Verbindungen. Geeignete synthetische Emulgatoren sind etwa anionaktive Verbindungen, wie Salze höhermolekularer Fettsäuren ($C_8$ bis $C_{18}$), Salze von Schwefelsäureestern, beispielsweise Natriumlaurylsulfat, beziehungsweise Sulfate von alkoxylierten Fettalkoholen oder Alkylphenolen, Salze von Sulfonsäuren, Alkylbenzolsulfonate und dergleichen sowie Fettanlagerungsprodukte verschiedener hydrophiler Gruppen, zum Beispiel Eiweißkondensationsprodukte oder Phosphate. Geeignete Emulgatoren sind aber auch in der Gruppe nichtionogener Verbindungen zu finden. Geeignet sind beispielsweise partielle Ester von Polyalkoholen, zum Beispiel Glycerinmono- beziehungsweise distearate, Sorbitmonostearat und dergleichen, Ethylenoxid- beziehungsweise Propylenoxidaddukte mit beispielsweise Fettsäuren, Fettalkoholen, Fettaminen, partiellen Fettsäureestern mehrwertiger Alkohole, Alkylphenolen und dergleichen, Amide höherer Fettsäuren, Lecitine und/oder Steroidverbindungen, wie Cholesterin und verwandte Verbindungen.

Neben den bisher genannten Komponenten können die salbenartig pastös eingestellten Klebstoffe weitere Hilfsstoffe, beispielsweise auf der Basis von Thixotropierungsmitteln, enthalten. Als Thixotropierungsmittel können unlösliche anorganische Verbindungen, z. B. Bentonit, Aluminiumhydroxid, Kieselsäuregallerten, Kaolin und dergleichen eingesetzt werden. Im allgemeinen wird allerdings die Klebkraft durch die Mitverwendung solcher Komponenten beeinträchtigt. Das ist bei der jeweils eingesetzten Menge solcher Hilfsstoffe zu berücksichtigen. Ein geeignetes

. . .

0169501
HENKEL KGaA
ZR-FE/Patente

Konservierungsmittel ist beispielsweise Formaldehyd. Schwerflüchtige wassermischbare Lösungsmittel beziehungsweise Feuchthaltemittel sind beispielsweise Glykole, Glycerin, Partialether und/oder -ester von Polyalkoholen und dergleichen. Geeignete Weichmacher, die ebenfalls zur Modifikation der Klebstoffmasse mitverwendet werden können, sind beispielsweise Phthalsäureester, acyclische Dicarbonsäureester, Polyester, beispielsweise aus aliphatischen oder aromatischen Dicarbonsäuren mit Diolen, Phosphate, wie Tricresylphosphat, Fettsäureester, Citronensäureester oder Epoxidweichmacher.

Die genannten Modifizierungsmittel für die Emulsionsklebstoffe können bereits während des Vorgangs der Emulsionspolymerisation im Reaktionsgemisch vorliegen, sofern sie das Ablaufen der Polymerisationsreaktion nicht beeinträchtigen. Ist eine Beeinträchtigung zu befürchten, dann können sie im Anschluß an die Herstellung des Emulsionspolymerisats dem fertigen Reaktionsprodukt beigemischt werden.

Die erfindungsgemäßen Emulsionspolymerisat-Klebstoffe sind praktisch unbegrenzt lagerstabil - das heißt sie neigen unter den Normalbedingungen der Lagerung nicht zu einem Aufrahmen oder Phasentrennung, besitzen eine hinreichende Anfangsklebrigkeit (Tack), bilden bei Wegschlagen der Flüssigphase im beschichteten Gut und/oder bei Trocknung auf anderem Wege eine Klebeverbindung in gewünschtem Ausmaß. Hier können zwei grundsätzliche Typen an Klebwirkung unterschieden werden, die auch miteinander gemeinsam im Klebstoff eingesetzt werden können: In den Rahmen der Erfindung fallen Emulsionspolymerisate mit Klebharzen, die beim Abbinden nicht mehr lösbare feste Klebstoffverbindungen ausbilden. Ebenso ist es aber möglich, permanent klebrige drucksensitive Klebharze auf dem Wege der Emulsionspolymerisation in die erfindungsgemäßen Klebstoffgemische einzubringen. Dabei können als Klebharze ausschließlich solche drucksensitiven Klebharze vorliegen. Für das beim

. . .

Verklebevorgang anfallende Ergebnis bedeutet das die Wiederablösbarkeit des aufgeklebten Materialteiles, woraufhin gewünschtenfalls erneut das das Klebharz tragende Materialteil an gleicher
oder an anderer Stelle einem Verklebevorgang zugeführt werden
kann. Möglich ist allerdings auch die gemeinsame Verwendung
von aushärtenden Klebharzen und drucksensitiven permanent
klebrigen Klebharzen. Auf diese Weise kann beispielsweise die
Anfangsklebrigkeit (Tack) des Klebstoffgemisches und/oder der
offene Zeitraum für den Verklebungsvorgang variiert werden.
Als permanent klebrige drucksensitive Harze sind beispielsweise
Acryl- beziehungsweise Methacrylsäureesterharze geeignet.

Wie eingangs angegeben, bildet die Auswahl geeigneter Behälter
für diese Klebstoffmassen einen wesentlichen Bestandteil der
erfindungsgemäßen Kombination. Nachfolgend werden bevorzugte
Ausgestaltungen für diesen Anteil der neuen Klebstoffgebinde
geschildert.

In einer ersten Ausführungsform ergibt sich eine besonders
günstige und einfache Ausgestaltung, wenn das Griffstück als
zylindrische Kunststoffhülse ausgebildet ist, in deren unterem
Ende ein kolbenartiges Abschlußelement gleitbar derart angeordnet ist, daß dieses sich infolge des beim Betätigen der
Dosiervorrichtung erzeugten Vakuums im Inneren der zylindrischen Kunststoffhülse selbsttätig in Richtung der Dosiervorrichtung am Kopf der zylindrischen Kunststoffhülse bewegt, um
derart zu gewährleisten, daß die Klebstoffmasse stets hohlraumfrei im Griffstück gelagert ist.

Dabei kann die Abgabeöffnung als permanente Öffnung ausgebildet sein, die mittels einer auch die Dosiervorrichtung umgebenden Abschlußkappe verschließbar ist derart, daß einem Austrocknen des nach dem Gebrauch in der Abgabeöffnung verbleibenden Klebstoffs begegnet ist.

. . .

Patentanmeldung 7142/45/50/    - 17 -      **0169501**
7251/7336 EP               **HENKEL KGaA**
                                                                ZR-FE/Patente

Zweckmäßig kann man dabei die Abgabeöffnung aus mittels Fingerdruck zusammendrückbarem Kunststoffmaterial ausbilden, um einen gegebenenfalls sich gebildet habenden dünnen Film an der Oberfläche des Klebstoffs in der Abgabeöffnung vor einem erneuten Gebrauch zu zerstören.

Die Abgabeöffnung kann aber auch schlitzartig ausgebildet sein und erst bei Betätigen der Dosiervorrichtung unter dem Druck des ausgetriebenen Klebstoffs öffnen. Dabei können die gegeneinanderliegenden, die schlitzartige Abgabeöffnung bildenden Flächen unter der Eigenspannung des diese bildenden Materials oder durch Federmittel in Schließstellung gehalten sein.

Besonders vorteilhaft ist es, wenn das Verteilerelement die Abgabeöffnung allseitig umgibt und eine im wesentlichen ebene Verstreichfläche aufweist, so daß man bei kontinuierlicher Klebstoffabgabe durch die Abgabeöffnung den Klebstoff kontinuierlich gleichförmig über große Flächen in einfachster Weise verstreichen kann.

Dabei können in dem Verteilerelement zwei sich unter einem rechten Winkel schneidende, zu den Rändern der Verstreichfläche sich verjüngende Verteilerrinnen für den Klebstoff ausgebildet sein, deren Schnittpunkt mit der in der Mitte des Verteilerelements angeordneten Abgabeöffnung zusammenfällt. Dadurch kann kontinuierlich aus der Abgabeöffnung austretender Klebstoff unabhängig von der jeweiligen Verstreichrichtung gleichmäßig über die gesamte Abmessung des Verteilerelements auf die zu verklebende Fläche aufgebracht werden. Dies setzt allerdings voraus, daß nach jedem Gebrauch die Verstreichfläche mit den sich verjüngenden Verteilerrinnen kurz abgewischt wird, um ein Aushärten des Klebstoffs in den Verteilerrinnen zu vermeiden, was zweckmäßig ohnehin auch dann erfolgen sollte, wenn die Verstreichfläche nicht mit vorbeschriebenen

. . .

Verteilerrinnen versehen wird, um ein sauberes Verstreichen beim nächsten Gebrauchen zu fördern.

Eine besonders einfache Ausgestaltung erhält man, wenn die Dosiervorrichtung ein elastisch eindrückbares und nach Freigabe zurückfederndes Teilelement am Kopf der zylindrischen Kunststoffhülse aufweist und das kolbenartige Abschlußelement gegen Verschiebung im Sinne einer Vergrößerung des Innenraums der zylindrischen Kunststoffhülse gesichert ist. Weiterer Mittel bedarf die Dosiervorrichtung dann nämlich nicht, wenn man in zuvor bereits beschriebener Weise die Abgabeöffnung schlitzartig ausbildet, derart, daß sich diese erst bei Betätigen der Dosiervorrichtung unter dem Druck des ausgetriebenen Klebstoffs öffnet.

Verwendet man allerdings eine als permanente Öffnung ausgebildete Abgabeöffnung, so empfiehlt es sich, daß die Dosiervorrichtung neben einem elastisch eindrückbaren und nach Freigabe zurückfedernden Teilelement am Kopf der zylindrischen Kunststoffhülse zwischen dem eindrückbaren Teilelement und der permanent geöffneten Abgabeöffnung noch ein Rückschlag-Ventil aufweist, wobei außerdem auch noch das kolbenartige Abschlußelement wieder gegen Verschiebung im Sinne einer Vergrößerung des Innenraumes der zylindrischen Kunststoffhülse gesichert sein soll.

Das Rückschlag-Ventil weist dabei vorzugsweise einen Ventilsitz auf, gegen den eine einseitig angelenkte Klappe unter Eigenspannung dichtend anliegt.

Bei einer weiteren Ausführungsform kann die Dosiervorrichtung ein eindrückbares und nach Freigabe zurückfederndes Teilelement aufweisen sowie eine zwischen diesem und dem übrigen Innenraum der Kunststoffhülse angeordnete Pumpenkammer, wobei zwischen dieser und dem übrigen Innenraum ein Rückschlag-

. . .

Ventil angeordnet ist, das beim Eindrücken des Teilelementes schließt und beim Zurückfedern desselben öffnet, und zwischen der Pumpenkammer und der Abgabeöffnung ein weiteres Rückschlag-Ventil angeordnet ist, das beim Eindrücken des Teilelementes und der Abgabe des Klebstoffs öffnet und beim Zurückfedern des Teilelementes schließt. Durch diese Ausbildung kann auf eine besondere Sperrvorrichtung für das kolbenartige Abschlußelement beim Betätigen der Dosiervorrichtung verzichtet werden.

Schließlich kan bei einer weiteren Ausführungsform die Dosiervorrichtung ein am Kopf der Kunststoffhülse gemeinsam mit einem elastischen Teilelement derselben eindrückbares, die Abgabeöffnung einschließendes hohles Mundstück aufweisen, dessen dem Innenraum der Kunststoffhülse zugerichtetes Ende bis auf Ventilöffnungen geschlossen ausgebildet ist, welche im zurückgefederten Zustand des Teilelements von das Mundstück gleitbar führenden Flächen verschlossen sind und bei Eindrücken des Mundstückes gemeinsam dem mit Teilelement mit dem Innenraum der Kunststoffhülse kommunizieren, wobei das kolbenartige Abschlußelement gegen Verschiebung im Sinne einer Vergrößerung des Innenraumes der Kunststoffhülse gesichert ist.

Die Erfindung ist nachfolgend anhand der Zeichnungen beispielsweise näher erläutert. Diese zeigt in

Fig. 1     einen Längsschnitt durch eine Ausführungsform eines Klebstoffgebindes gemäß der Erfindung mit bei nicht betätigter Dosiervorrichtung geschlossener Abgabeöffnung,

Fig. 2     einen Teilschnitt entsprechend Figur 1 mit bei betätigter Dosiervorrichtung geöffneter Abgabeöffnung,

Fig. 3     einen Längsschnitt durch den Kopfbereich einer

. . .

weiteren Ausführungsform eines Klebstoffgebindes gemäß der Erfindung,

Fig. 4    einen Längsschnitt durch eine weitere Ausführungsform eines Klebstoffgebindes gemäß der Erfindung,

Fig. 5    einen Schnitt längs der Linie A-A der Figur 4 in unbetätigter Stellung einer dort vorgesehenen Dosiervorrichtung,

Fig. 6    einen Figur 5 entsprechenden Schnitt bei betätigter Stellung der Dosiervorrichtung,

Fig. 7    eine gegenüber der Ausführungsform nach den Figuren 4 bis 6 etwa abgewandelte Ausführungsform in einem Teillängsschnitt,

Fig. 8    eine Ansicht in Richtung des Pfeiles B in Figur 7 gesehen,

Fig. 9    einen Teillängsschnitt einer weiteren Ausführungsform eines Klebstoffgebindes gemäß der Erfindung in unbetätigter Stellung einer dort vorgesehenen Dosiervorrichtung und in

Fig.10    einen Figur 9 ähnlichen Teillängsschnitt in betätigter Stellung der betreffenden Dosiervorrichtung.

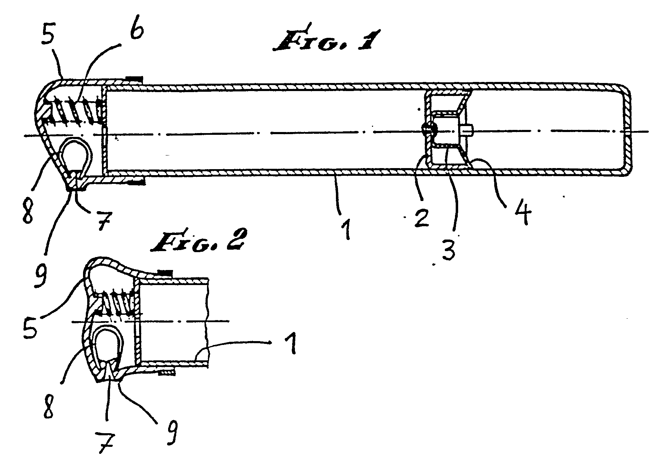

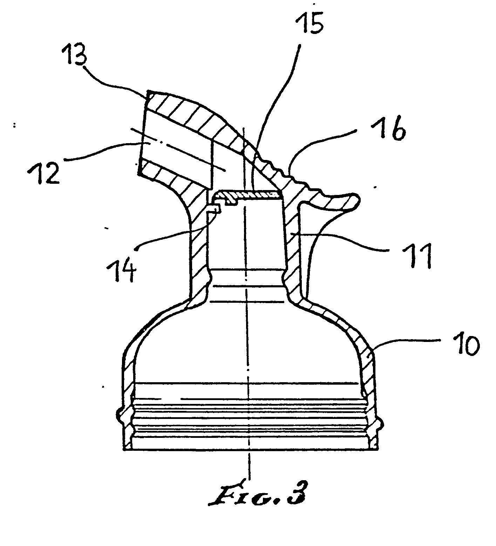

Bei der Ausführungsform nach den Figuren 1 und 2 ist in der Nähe eines Endes einer zylindrischen Hülse 1 ein kolbenartiges Abschlußelement 2 angeordnet, das mit einer Spreizfeder 3 versehen ist, deren Enden 4 federnd gegen die Innenwandung der zylindrischen Hülse 1 derart greifen, daß das kolbenartige Abschlußglied sich wohl gemäß Figur 1 nach links bewegen kann, gegen eine Bewegung nach rechts gemäß Figur 1 jedoch gesperrt

. . .

beziehungsweise gesichert ist. Am anderen Ende beziehungsweise am Kopf der zylindrischen Hülse 1 ist ein elastisch eindrückbares Teilelement 5 angeordnet, das mittels einer Rückstellfeder 6 in der in Figur 1 wiedergegebenen Ausgangsstellung gehalten ist.

Im Teilelement 5 ist ferner eine schlitzartige Abgabeöffnung 7 ausgebildet, die durch ein bügelartiges Federelement 8 in der in Figur 1 wiedergegebenen Schließstellung gehalten ist. Die Schlitzöffnung 7 ist allseitig von einem Verteilerelement 9 umgeben, welches eine im wesentlichen ebene Verstreichfläche aufweist. Der Innenraum der zylindrischen Hülse 1 sowie des eindrückbaren Teilelementes 5 ist mit einem salbenartig-pastösen Klebstoff der vorbeschriebenen Art gefüllt. Die Betätigung des vorbeschriebenen Klebstoffgebindes erfolgt in einfachster Weise dadurch, daß die zylindrische Hülse 1 als Griffstück von einer Hand ergriffen wird und das eindrückbare Teilelement 5 vorzugsweise mittels des Daumens der Greifhand gegen die Wirkung der Rückstellfeder 6 niedergedrückt wird, wobei sich unter dem dabei entwickelnden Druck im Innenraum die schlitzartige Öffnung 7 öffnet und Klebstoff abgibt, wie Figur 2 zeigt, während das kolbenartige Abschlußelement 2 durch die Spreizfederenden 4 daran gehindert ist, unter dem betreffenden Innendruck nach rechts gemäß Figur 1 auszuweichen. Nach der Freigabe des eindrückbaren Teilelements 5 kehrt dieses unter der Wirkung der Rückstellfeder 6 aus der Stellung gemäß Figur 2 in die Ausgangsstellung gemäß Figur 1 zurück, wobei die schlitzartige Öffnung 7 als erstes schließt und infolge der dann eintretenden Volumenvergrößerung des Innenraumes des Kunststoffgebindes sich in diesem ein Unterdruck einstellt, durch den das kolbenartige Abschlußelement 2 um einen der vorher abgegebenen Klebstoffmenge entsprechenden Betrag gemäß Figur 1 nach links bewegt wird. Wie erkennbar ist, kann der betreffende Abgabevorgang beliebig oft hintereinander wiederholt werden und dabei gleichzeitig der durch die Abgabeöffnung 7 austretende Klebstoff mittels des Verteilerelementes 9 gleichmäßig auf eine zu verklebende Fläche verteilt werden.

. . .

Patentanmeldung D 7142/45/50/    - 22 -          **0169501**
7251/7336 EP                     **HENKEL KGaA**
                                        ZR-FE/Patente

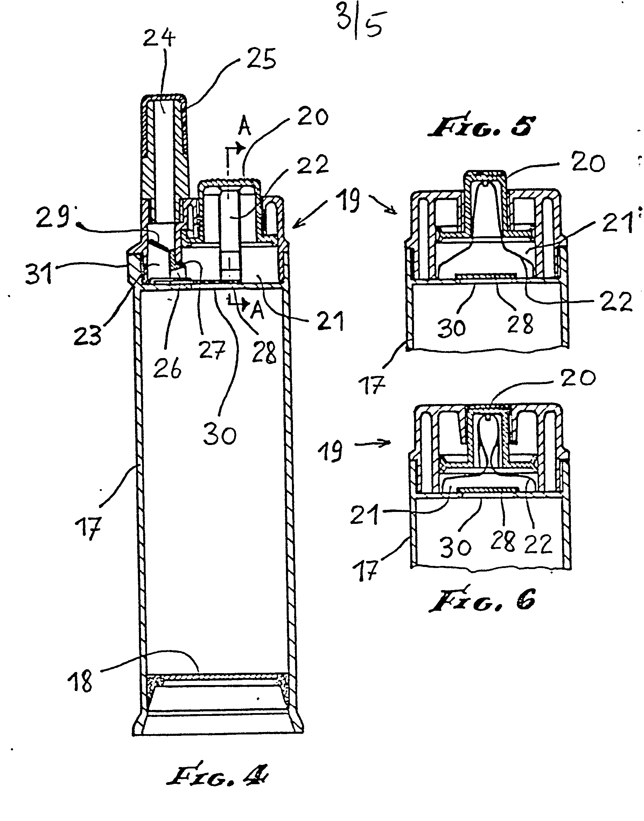

In Figur 3 ist eine weitere Ausführungsform eines Kopfteils eines Klebstoffgebindes wiedergegeben, und zwar nur ein elastisch eindrückbares und nach Freigabe zurückfederndes Teilelement 10, mit dem eine nicht dargestellte zylindrische Hülse mit kolbenartigem Abschlußelement ähnlich wie bei dem vorbeschriebenen Kunststoffgebinde gemäß den Figuren 1 und 2 verbindbar ist. An dem eindrückbaren Teilelement 10 ist eiteilig ein Mundstück 11 angeformt, an dessen Ende sich eine permanent offene Abgabeöffnung 12 befindet, welche Abgabeöffnung von umgebendem mittels Fingerdruck zusammendrückbarem Kunststoffmaterial gebildet ist, wobei die umgebenden kreisringförmigen Stirnflächen 13 ein Verteilerelement bilden, mittels dessen aus der Öffnung 12 austretender Klebstoff gleichmäßig auf eine zu verklebende Fläche verteilbar ist. Im Inneren des Mundstücks 11 ist ein Ventilsitz 14 ausgebildet, gegen den eine einseitig am Mundstück angelenkte Ventilklappe 15 unter Eigenspannung dichtend anliegt. Die Oberseite des Mundstücks ist mit einer geriffelten Druckfläche 16 ausgebildet. Die Wirkungsweise des beschriebenen Klebstoffgebindes ist derart, daß beim Eindrücken des flexiblen Teilelements 10 die Ventilklappe 15 unter dem dabei entwickelten Druck öffnet und Klebstoff aus der Abgabeöffnung 12 abgegeben wird, während bei Freigabe der Druckfläche 16 zunächst die Ventilklappe 15 unter ihrer Eigenspannung schließt, worauf sich im Inneren des Klebstoffgebindes ein Unterdruck aufbaut, der ein Nachrücken des am anderen Ende des Klebstoffgebindes angeordneten kolbenartigen Abschlußelementes in der zuvor bei der Ausführungsform gemäß den Figuren 1 und 2 schon beschriebenen Weise bewirkt.

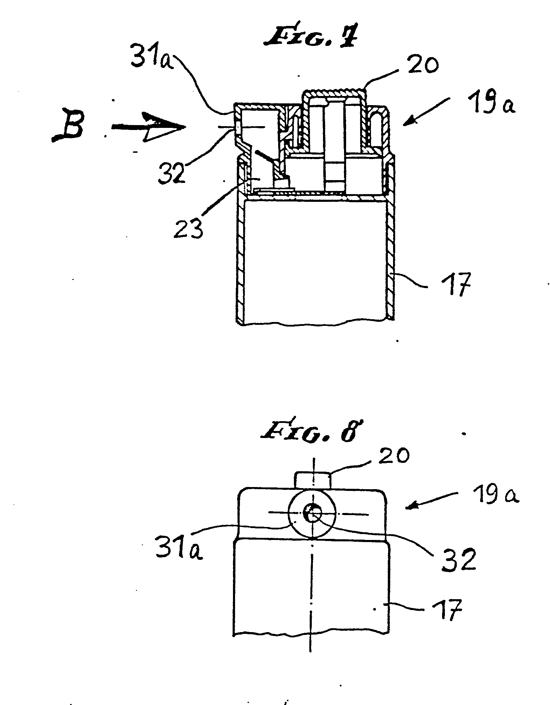

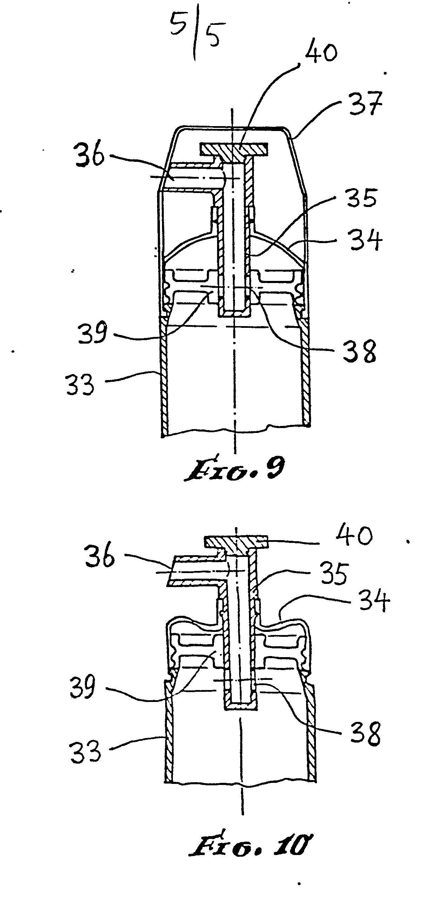

Bei dem in den Figuren 4 bis 6 wiedergegebenen Ausführungsbeispiel eines Klebstoffgebindes ist eine zylindrische Kunststoffhülse 17 an ihrem unteren Ende wieder mit einem kolbenartigen Abschlußelement 18 versehen und an ihrem oberen Ende mit einem Kopfstück 19, in dem ein kolbenartig

. . .

ausgebildetes eindrückbares Teilelement 20 gleitbar angeordnet ist, das bei seinem Absenken das Volumen einer Pumpenkammer 21 verringert, die im Kopfstück 19 ausgebildet ist, wobei eine bügelartige Rückstellfeder 22 das kolbenartige Teilelement 20 nach seiner Freigabe wieder nach oben gemäß der zeichnerischen Darstellung bewegt. Im Kopfstück 19 ist ferner ein Abgabekanal 23 ausgebildet, der in einer Abgabeöffnung 24 endet, die durch eine Schraubkappe 25 verschließbar ist. Der Abgabekanal 23 steht mit der Pumpenkammer 21 über einen Durchtritt 26 in Verbindung. Dieser Durchtritt 26 ist in einem Spritzgußteil 27 ausgebildet, das mit einer einseitig angelenkten Ventilklappe 28 und einer weiteren Ventilklappe 29 einstückig geformt ist, wobei letztere zur Sperrung des Abgabekanals 23 und die Ventilklappe 28 zur Sperrung beziehungsweise Freigabe einer Öffnung 30 zwischen dem Innenraum der zylindrischen Hülse 17 und der Pumpenkammer 21 dient. Die Betätigung des vorbeschriebenen Klebstoffgebindes ist derart, daß beim Niederdrücken des kolbenartigen Teilelementes 20 aus der in den Figuren 4 und 5 wiedergegebenen Stellung in die aus Figur 6 ersichtliche Stellung in der Pumpenkammer 21 und im Abgabekanal 23 befindlicher Klebstoff bei durch die Ventilklappe 28 gesperrter Öffnung 30 und sich öffnender Ventilklappe 29 im Abgabekanal 23 durch die Abgabeöffnung 24 abgegeben wird. Bei Freigabe des kolbenartigen Teilelements 20 wird infolge der sich dabei ergebenden Vergrößerung des Volumens der Pumpenkammer 21 in dieser ein Unterdruck aufgebaut, welcher die Ventilklappe 28 öffnet und die Ventilklappe 29 schließt, so daß unter entsprechendem Nachrücken des kolbenartigen Abschlußelementes 18 Klebstoff aus dem Innenraum der zylindrischen Hülse 17 in die Pumpenkammer 21 gelangt, um beim nächsten Niederdrücken des kolbenartigen Teilelements 20 abgegeben zu werden. Wie erkennbar ist, braucht bei dieser Ausführungsform das kolbenartige Abschlußelement 18 nicht mit dieses gegen eine Abwärtsbewegung gemäß Figur 4 sichernden Mitteln versehen zu sein, weil die Ventilklappe 28 den Innenraum der Hülse 17 gegen den

. . .

Patentanmeldung 7142/45/50/    – 24 –      **0169501**
7251/7336 EP                         **HENKEL KGaA**
ZR-FE/Patente

beim Niederdrücken des kolbenartigen Teilelementes 20 in der Pumpenkammer 21 sich aufbauenden Druck abschirmt. Nach jedem Austreten einer bestimmten Klebstoffmenge aus der Abgabeöffnung 24 kann diese mittels eines seitlich am Kopfstück 19 ausgebildeten Verteilerelementes 31 gleichmäßig auf einer zu verklebenden Fläche verteilt werden.

Um diesen Verteilungs-Verstreichvorgang weiter zu vereinfachen, ist bei der gegenüber der Ausführungsform nach den Figuren 4 bis 6 nur geringfügig abgewandelte Ausführungsform gemäß den Figuren 7 und 8 eine Abgabeöffnung 32 seitlich am Kopfstück 19a ausgebildet, und zwar mittig in einem kreisförmig ausgebildeten Verteilerelement 31a, während die übrige Ausbildung derjenigen gemäß den Figuren 4 bis 6 entspricht. Wie erkennbar ist, kann aufgrund dieser Ausgestaltung kontinuierlich durch entsprechendes mehrmaliges Niederdrücken des kolbenartigen Teilelementes 20 Klebstoff durch die Abgabeöffnung 32 abgegeben werden und gleichzeitig gleichmäßig auf eine zu verklebende Fläche aufgetragen und verteilt werden.

Schließlich ist in den Figuren 9 und 10 noch eine weitere Ausführungsform wiedergegeben, wobei hier nur der obere Bereich des betreffenden Klebstoffgebindes dargestellt ist, und zwar in Figur 9 in unbetätigter und in Figur 10 in betätigter Stellung. Wiederum ist eine zylindrische Kunststoffhülse 33 vorgesehen, in deren unterem Ende ein nicht gezeigtes kolbenartiges Abschlußelement angeordnet ist, das ähnlich wie bei den Ausführungsformen nach den Figuren 1 bis 3 gegen eine Bewegung im Sinne einer Erweiterung des Hülseninnenraumes gesichert ist. Am Kopf der zylindrischen Hülse 33 befindet sich wiederum ein elastisch eindrückbares Teilelement 34, mit dem ein winkelförmiges hohles Mundstück 35 verbunden ist, das in seinem einen Winkelteil mit einer Abgabeöffnung 36 versehen ist, die in Nichtgebrauch-Stellung durch eine Abschlußklappe 37 verschließbar ist. Das andere Winkelende des Mundstücks 35 ist bis auf

. . .

Ventilöffnungen 38 geschlossen ausgebildet, wobei diese Ventilöffnungen 38 in unbetätigter Stellung gemäß Figur 9 durch ein ringförmiges Führungselement 39 abgedeckt beziehungsweise verschlossen sind. Das Mundstück 35 ist ferner mit einem oberen Druckstück 40 versehen. Die Betätigungsweise des betreffenden Klebstoffgebindes ist derart, daß beim Niederdrücken des Mundstücks 35 mittels des Druckstücks 40 aus der in Figur 9 wiedergegebenen in die in Figur 10 wiedergegebene eingedrückte Stellung die Ventilöffnungen 38 im Mundstück freigegeben werden und mit dem Innenraum des Klebstoffgebindes kommunizieren, so daß Klebstoff aus diesem Innenraum durch die Ventilöffnungen 38 in das Innere des Mundstücks 35 gelangt und durch den beim Niederdrücken desselben entstehenden Druck aus der Abgabeöffnung 36 abgegeben wird, während das kolbenartige Abschlußelement am anderen Ende der zylindrischen Hülse 33 in der zuvor beschriebenen Weise an einer Bewegung nach außen gehindert ist. Beim Loslassen des Druckstücks 40 werden die Ventilöffnungen 38 wieder durch den Führungsring 39 verschlossen und durch das beim Rückfedern des flexiblen Teilelementes 34 sich im Inneren des Klebstoffgebindes aufbauende Vakuum rückt das nicht gezeigte kolbenartige Abschlußelement am unteren Ende der zylindrischen Hülse 33 entsprechend der erfolgten Klebstoffabgabe nach. Auch dieser Vorgang kann entsprechend der gewünschten Klebstoffabgabe beliebig wiederholt werden, wobei der abgegebene Klebstoff entweder durch die die Abgabeöffnung 36 umgebenden Stirnflächen des Mundstücks 35 auf die zu verklebende Fläche verteilt werden kann oder durch ein an anderer geeigneter Stelle am Kopf des Klebstoffgebindes ausgebildetes, nicht dargestelltes Verteilerelement, ähnlich dem Verteilerelement 31 bei der Ausführungsform gemäß den Figuren 4 bis 6.

Die salbenartig-pastös eingestellten, nicht freifließenden Emulsionspolymerisate können aber auch in anderen Behältern verwendet werden, das heißt auch bei Spendern beziehungsweise Behältern ohne Dosiervorrichtung am Kopf des Behälters, ohne

. . .

die Lagerfähigkeit des betreffenden Klebstoffes in für die praktische Handhabung unzulässiger Weise zu begrenzen und ohne die Handhabbarkeit des Klebstoffgebindes wesentlich einzuschränken.

Vor allem wurde gefunden, daß die Lagerfähigkeit der betreffenden salbenartig-pastös eingestellten, nicht freifließenden Emulsionspolymerisate für praktisch in Betracht kommende Zeiträume nicht beeinträchtigt wird, wenn die jeweils im Klebstoffgebinde verbleibende Klebstoffmasse stets gegen Luftrücktritt in das Gebinde gesichert ist.

Zweckmäßig kann man ein Verteilerelement zur verstreichenden Aufbringung des die Abgabeöffnung verlassenden Klebstoffes auf eine zu verklebende Fläche am Behälter vorsehen wie bei dem zuvor dargestellten Vorschlag. Dies braucht jedoch nicht unbedingt zu sein, weil man je nach Art der verwendeten Abgabevorrichtung, zum Beispiel mittels schmaler Abgabespitze, den betreffenden Klebstoff auch in schwer zugängliche Ecken oder dergleichen applizieren kann, das heißt ohne einer nachfolgenden Verstreichung zu bedürfen.

Eine besonders einfache, aber dennoch gut handhabbare Ausführungsform erhält man, wenn der Behälter als elastisch verformbare Tube ausgebildet ist, zwischen welcher und dem Klebstoff eine beutelförmige, luftdichte, bleibend beziehungsweise unelastisch verformbare Folie angeordnet ist und wenn in der elastisch verformbaren Tube mindestens eine Lüftungsöffnung ausgebildet ist.

Es hat sich gezeigt, daß bei dieser Ausgestaltung einfach und preiswert herzustellende Kunststofftuben verwendbar sind, wie solche beispielsweise für Haarwaschmittel und sonstige Feinwaschmittel schon verwendet werden, bei denen es nichts ausmacht, wenn nach dem Ausdrücken einer zu verbrauchenden

. . .

Waschmittel-Portion bei Zurückfedern der elastischen Kunststofftube Luft in das Innere derselben gelangt und mit dem verbleibenden Tubeninhalt in Kontakt bleibt. Eine derartige Lufteinsaugung wird beim erfindungsgemäßen Behälter durch die innenliegende beutelförmige Folie verhindert, weil diese ihre beim Zusammendrücken der äußeren elastischen Tube eingenommene komprimierte Konfiguration beibehält.

Als vorteilhaft hat es sich erwiesen, wenn die bleibend beziehungsweise unelastisch verformbare Folie neben ihrer Luftdichtigkeit auch noch wasserdampfundurchlässig ist. Als besonders geeignete Folien kommen hierfür beispielsweise solche aus Polyethylen niederer, mittlerer und hoher Dichte sowie Polypropylen gereckt und ungereckt in Betracht.

Eine besonders zweckmäßige und einfache Ausführung erhält man, wenn die Folie als Verbundfolie ausgebildet ist, deren einer Teil als mit einer aus Kunststoff bestehenden elastisch verformbaren Tube verschweißfähige Kunststoffolie und deren anderer Teil als luft- und wasserdampfundurchlässige, bleibend beziehungsweise unelastisch verformbare Folie ausgebildet ist. Als verschweißfähige Kunststoffolie kommen hierbei beispielsweise solche aus Polyethylen oder ungerecktem Polypropylen in Betracht.

Es kommen aber auch wasserdampfundurchlässige Folien aus Polyester, zum Beispiel Polyethylenglycolterephthalat in Betracht. Außerdem können beliebige andere Folien (Polyester, Polyamide, Zellglas) durch Beschichtung mit Polyvinylidenchlorid (einseitig oder beidseitig) wasserdampfundurchlässig gemacht werden.

Falls die äußere elastische Tube aus Material hergestellt wird, welches mit der innenliegenden Kunststoffolie nicht heißsiegelverschweißfähig sein sollte, kann das Tubenmaterial im Verbindungsbereich mit der Folie, das heißt im Mundstückbereich, auch

. . .

Patentanmeldung 7142/45/50/   - 28 -      **0169501**
7251/7336 EP                         **HENKEL KGaA**
                                                ZR-FE/Patente

mit einem Schmelzklebstoff beschichtet sein, um ebenfalls durch Wärmeaufbringung eine Verbindung miteinander in einfacher Weise bewirken zu können.

Eine weitere Ausführungsform der Erfindung kennzeichnet sich dadurch, daß der Behälter als zylindrische Kunststoffhülse ausgebildet ist, in deren der Abgabeöffnung gegenüberliegendem Ende ein in Richtung der Abgabeöffnung antreibbarer Kolben ausgebildet ist.

Eine einfache und zweckmäßige Ausgestaltung ergibt sich dabei, wenn der Kolben mittels eines Spindeltriebs antreibbar ist.

Schließlich kann der Kolben bei einer weiteren Ausführungsform auch mittels einer Balgpumpe antreibbar sein, die Druckluft einem Druckraum zuführt, der auf der dem Klebstoff gegenüberliegenden Seite des Kolbens ausgebildet ist.

Dabei kann zweckmäßig zwischen Balgpumpe und Druckraum ein Rückschlagventil angeordnet sein.

Ferner kann die Balgpumpe seitlich derart an der zylindrischen Kunststoffhülse außen angeordnet sein, daß diese mittels der Finger der die Kunststoffhülse ergreifenden Hand betätigbar ist, wodurch die Handhabung des Klebstoffgebindes besonders günstig gestaltet wird.

Bei Lagerung solcher Klebstoffgebinde unter Extrembedingungen, insbesondere beim Lagern über sehr lange Zeiträume und/oder bei der Aufbewahrung unter hohen Temperaturen und/oder sehr trockenen Bedingungen kann es wünschenswert sein, einem möglichen Wasserverlust der Emulsionspolymerisate auch dadurch zu begegnen, daß eine Wasserdampfdiffusion durch die Wandungen des festen Behältermaterials weitgehend oder vollständig ausgeschlossen wird. Hier ist es möglich, zur Behälterausgestaltung

. . .

wasserdampfdiffusionsfeste Kunststoffe oder Metallbehälter zu verwenden. Grundsätzlich ist es bekannt, daß feste Kunststoffe unterschiedliche Dichtewerte gegenüber einer Wasserdampfdiffusion besitzen können. Thermoplastisch verformbare Kunststoffmaterialien mit hoher Dichte gegen Wasserdampfdiffusion sind bekannt (vergleiche Polymer Handbook, II Ed. (1975) John Wiley & Son, N.Y.). Demnach sind besonders geeignet Polyethylen hoher Dichte, Polyvinylidenchlorid, Polypropylen, Polyisopren und andere mehr.

Als Metallbehälter können solche aus den verschiedensten Metallen, insbesondere Leichtmetallegierungen, verwendet werden. Beispielsweise sind zylindrische Aluminiumröhren in Betracht zu ziehen. Auch andere duktile Metalle wie Kupfer oder Zink und seine Legierungen kommen für spezielle Probleme in Frage.

Je nach den gestellten Anforderungen kann es sinnvoll sein, die vorstehend erwähnten Materialien in Kombination beziehungsweise im Verbund anzuwenden. So könnte für den inneren Raum des Behälters ein besonders gleitfähiges und dicht an der Bodenplatte abschließendes Material eingesetzt werden, während nach außen hin ein Stabilität verleihendes und gut beschriftbares beziehungsweise beklebbares Material verwendet wird. Auch ist man nicht unbedingt an eine röhrenartige Ausgestaltung des Aufnahmebehälters gebunden. Andere Querschnitte wie beispielsweise ovale oder hexagonale könnten in Betracht gezogen werden.

Ferner ist es nicht erforderlich, daß der Behälter in seiner Gesamtheit aus entsprechend wasserdampfdichten Materialien ausgebildet ist. Konstruktive Einzelheiten können es wünschenswert erscheinen lassen, daß Einzelelemente - beispielsweise der Behälterkopf mit seinem Pumpsystem aus einem für seine Ausbildung besonders geeigneten Material - ohne Rücksicht auf die Werte zur Wasserdampfdiffusion - gestaltet sind. Naturgemäß

. . .

kann aber auch bei der Ausbildung aller Konstruktionsteile des Spenders auf diesen Gesichtspunkt möglichst hoher Wasserdampfdichte Wert gelegt werden.

In einer weiteren Ausgestaltung dieser Bemühungen um möglichst hohe Behälterdichte sieht die Erfindung vor, das Einhand-Klebstoffgebinde als Behälter mit geschlossenem Unterboden auszubilden, wobei ein kolbenartiges Abschlußelement gleitbar innerhalb des Behälters an seinem unteren Ende angeordnet ist. In dieser Ausführungsform kann das kolbenartige Abschlußelement permanent in Richtung der Entleerungsbewegung gespannt gelagert sein. Ermöglicht wird das beispielsweise durch eine Druckfeder im Inneren des Behälters zwischen dem Behälterunterboden und der Unterseite des kolbenartigen Abschlußelements und/oder durch die Anordnung eines gespannten Treibgases an entsprechender Stelle des Klebstoffgebindes. Bei Betätigung der Dosiervorrichtung mittels der Greifhand treibt das unter Entleerungsdruck stehende kolbenartige Bodenelement Klebstoff aus der Entnahmeöffnung am Kopf des Gebindes aus, bis die Betätigung der Dosiereinrichtung wieder unterbrochen wird.

Auch in dieser Ausführungsform ist die stets hohlraumfreie Lagerung des jeweils im Vorratsbehälter verbleibenden Klebstoffs bei entsprechender Verkleinerung des Lagerraumes und die Abgabe des Behälterinhaltes bis zum vollständigen Verbrauch des Klebstoffvorrats gewährleistet. Naturgemäß ist dabei darauf zu achten, daß eine hinreichende Entleerungsspannung bis zum gewünschten Ende der Klebstoffentnahme erhalten bleibt.

. . .

# B e i s p i e l e

## a) Herstellung von Dispersionen im 30 kg Maßstab

Gearbeitet wurde in einer Glasapparatur mit 50 l Füllinhalt, einem stufenlos regelbaren Ankerrüher, einem 20 l Dosiergefäß und einem aufsteigenden Rückflußkühler. Die Apparatur wurde nach jedem Ansatz mit Wasser und anschließend Aceton gespült und getrocknet.

Verfahrensweise

Im Reaktor wurde der überwiegende Teil der wäßrigen Phase vorgelegt und darin Natriumbicarbonat, Emulgator, Entschäumer und Schutzkolloid 2 Stunden bei 75 $^{\circ}$C gelöst (Vorlösung). Die vorgesehene Monomermenge oder die Mischung der Monomeren wurde im Dosiergefäß vorgelegt.

Der Initiator (Kaliumpersulfat) wurde im restlichen Wasser gelöst und die Lösung in ein weiteres Dosiergefäß gegeben.

Zur Durchführung der Polymerisation wurden bei 82 bis 88 $^{\circ}$C gleichzeitig Monomer und Initiatorlösung in den Reaktor dosiert, und zwar mit den aus der folgenden Tabelle zu ersehenden Geschwindigkeiten.

...

Tabelle 1

| Zeit (min) | Zudosierte Initiatorlösung (1) | Zudosierte Monomere (1) |
|---|---|---|
| O | O | O |
| 20 | O,4 | 1,6 |
| 40 | O,4 | 1,6 |
| 60 | O,8 | 4,6 |
| 120 | 1,2 | 7,6 |
| 180 | 1,6 | 10,6 |
| 240 | 2,0 | 13,6 |
| 260 | 2,3 | 13,6 |

Die Reaktionstemperatur wurde im Bereich von 80 bis 88 $^{\circ}$C gehalten. Bei zu starkem Rückfluß wurde die Monomerzugabe verzögert. Nach Ende der Monomerzugabe wurde zur Nachreaktion die Temperatur auf 85 bis 95 $^{\circ}$C erhöht. Die Dispersionen konnten nach Abkühlen auf ca. 35 $^{\circ}$C abgefüllt werden.

b) Herstellung im Labormaßstab

Gearbeitet wurde in einer Planschliffglasapparatur mit 2 l Füllinhalt, Metallankerrührer, Intensivkühler und Dosiergefässen. Im Reaktionsgefäß wurde der größte Teil des Wassers vorgelegt und darin das Natriumbicarbonat, der Emulgator, der Entschäumer und das Schutzkolloid 2 Stunden bei 80 bis 85 $^{\circ}$C gelöst. Die Monomeren wurden in einem O,5 l Dosiertrichter vorgelegt. Zur Herstellung der Initiatorlösung wurde Kaliumpersulfat in kaltem Wasser gelöst. Die Lösung wurde in einem weiteren Dosiertrichter vorgelegt.

...

Zur Durchführung der Polymerisation wurden bei 82 bis 88 °C gleichzeitig Monomere und Initiatorlösung in den Reaktionsbehälter gegeben. Zudosiert wurde wie in der nachfolgenden Tabelle 2 angegeben.

Tabelle 2

| Zeit (min) | Zudosierte Initiatorlösung (ml) | Zudosierte Monomere (ml) |
|---|---|---|
| 0 | 0 | 0 |
| 20 | 20 | 50 |
| 40 | 20 | 100 |
| 60 | 35 | 175 |
| 120 | 50 | 300 |
| 180 | 65 | 425 |
| 240 | 75 | 550 |

Die Reaktion wurde unter Rühren durchgeführt. Die Reaktionstemperatur wurde dabei im Bereich zwischen 80 und 88 ° gehalten. Bei zu starkem Rückfluß wurde die Monomerzugabe vorübergehend gedrosselt. Nach Ende der Monomerzugabe wurde der Rest der Initiatorlösung schnell zugegeben und das Ende des Rückflusses abgewartet. Die Nachreaktion fand sodann innerhalb von 30 Minuten im Temperaturbereich von 85 bis 95 °C statt.

...

## Beispiel 1

| Rohstoffklasse | Rohstoff | Einsatzkonzentration | |
|---|---|---|---|
| | | Gew.% | kg |
| Wasser | | 41,8 | 12,540 |
| Emulgator | Nonylphenol-10 EO sulfat, 30 %ig | 0,3 | 0,300 |
| | $NaHCO_3$ | 0,2 | 0,060 |
| Entschäumer, | handelsüblich | 0,05 | 0,015 |
| Schutzkolloide | PEG 20000 | 7,0 | 2,100 |
| Monomere | Vinylacetat | 42,20 | 12,660 |
| Initiatorlösung | Kaliumpersulfat | 0,25 | 0,075 |
| | Wasser | 7,5 | 2,250 |

| | |
|---|---|
| Viskosität: (Brookfield RVT 20 °C/20 UpM | 35000 mPas |
| Aussehen: (Film/Glas) | klar, stippenfrei |
| Flexibilität: | spröde-elastisch |
| Film/Wasser- verhalten: | beständig |
| Teilchengröße: | ca. 250 nm |
| Feststoffgehalt: | 49,9 % |

...

## Beispiel 2

Beispiel 1 wurde wiederholt, jedoch wurde anstatt
0,3 Gewichtsprozent Emulgator nur 0,1 Gewichtsprozent
desselben Emulgators verwendet.

Viskosität:                  22000 mPas
(Brookfield RVT
20 °C/20 UpM
Aussehen:                    Klar, sehr wenig Stippen
(Film/Glas)
Flexibilität:                spröde - elastisch
Film/Wasser-
verhalten:                   beständig
Teilchengröße:               330 nm
Feststoffgehalt:             50,0 %

## Beispiel 3

Beispiel 1 wurde im 1kg Labormaßstab wiederholt, jedoch
wurden anstelle von 7,0 Gewichtsprozent eines Schutzkolloids mit Molgewicht 20000 10,0 Gewichtsprozent
eines Schutzkolloids mit Molgewicht 12000 verwendet.
Die Menge an Vinylacetat betrug 39,2 Gewichtsprozent.

Viskosität:                  32000 mPas
(Brookfield RVT
20 °C/20 UpM)
Aussehen:                    klar, stippenfrei
(Film/Glas)
Flexibilität:                wenig elastisch
Film/Wasser-
verhalten:                   beständig
Teilchengröße:               160 nm
Feststoffgehalt              ~50 %                    ...

### Beispiel 4

| Rohstoffklasse | Rohstoff | Einsatzkonzentration | |
|---|---|---|---|
| | | Gew.% | kg |
| Wasser | | 41,34 | 12,402 |
| Emulgator | Nonylphenol-10-EO-Sulfat 30 %ig | 0,50 | 0,498 |
| | NaHCO$_3$ | 0,20 | 0,060 |
| Entschäumer, | handelsüblich | 0,05 | 0,015 |
| Schutzkolloide | PEG 20000 | 7,0 | 2,100 |
| Monomere | Vinylacetat | 42,0 | 12,600 |
| Initiator-lösung | Kaliumpersulfat | 0,25 | 0,075 |
| | Wasser | 7,5 | 2,250 |

Viskosität:                           140000 mPas
(Brookfield RVT
20 °C/20 UpM
Aussehen:                             klar, stippenfrei
(Film Glas)
Flexibilität:                         elastisch
Film/Wasser-
verhalten:                            beständig
Teilchengröße:                        ca. 300 nm
Feststoffgehalt:                      50,1 %

...

D 7142/45/50/7251/7336 EP

## Beispiel 5

| Rohstoffklasse | Rohstoff | Einsatzkonzentration | |
|---|---|---|---|
| | | Gew.% | kg |
| Wasser | | 34,17 | 10,251 |
| Emulgator | Nonylphenol-10 EO-sulfat 30 %ig | 1,0 | 0,999 |
| | $NaHCO_3$ | 0,2 | 0,060 |
| Entschäumer, | handelsüblich | 0,2 | 0,060 |
| Schutzkolloide | PEG 12000 | 3,5 | 1,050 |
| Monomere | Vinylacetat | 33,56 | 10,068 |
| | Dibutylmaleinat | 17,29 | 5,187 |
| Initiator-lösung | Kaliumpersulfat | 0,25 | 0,075 |
| | Wasser | 7,5 | 2,250 |

Viskosität: 19000 mPas
(Brookfield RVT
20 °C/20 UpM

Aussehen: klar, stippenfrei
(Film/Glas)

Flexibilität: elastisch

Film/Wasser-
verhalten: beständig

Teilchengröße: ca. 330 nm

Feststoffgehalt: 55,7 %

. . .

## Beispiel 6

| Rohstoffklasse | Rohstoff | Einsatzkonzentration Gew.% | kg |
|---|---|---|---|
| Wasser | | 36,5 | 12,251 |
| Emulgator | Nonylphenol-10 EO Sulfat 30 %ig | 1,0 | 0,999 |
| | NaHCO$_3$ | 0,19 | 0,057 |
| Entschäumer, | handelsüblich | 0,10 | 0,030 |
| Schutzkolloide | PEG 12000 | 5,0 | 1,500 |
| Monomere | Vinylacetat | 32,64 | 9,792 |
| | Dibutylmaleinat | 16,81 | 5,043 |
| Initiator-lösung | Kaliumpersulfat | 0,25 | 0,075 |
| | Wasser | 7,5 | 2,250 |

| | |
|---|---|
| Viskosität: (Brookfield RVT 20 °C/20 UpM | 84000 mPas |
| Aussehen: (Film/Glas) | klar, stippenfrei |
| Flexibilität: | elastisch |
| Film/Wasser-verhalten: | beständig |
| Teilchengröße: | ca. 300 nm |
| Feststoffgehalt: | 56,4 % |

. . .

## Beispiel 7 bis 20

In Analogie zu Beispiel 3 wurden im 1 kg Labormaßstab
die Dispersionen nach Beispiel 7 - 20 hergestellt. Die
Dispersionen nach den Beispielen 7 - 14 lieferten spröde
Filme, die nach den Beispielen 15 - 20 elastische Filme.
Alle Produkte waren praktisch stippenfrei und entsprechende Filme gegen Wasser beständig. Weitere Meßdaten
sind in Tabelle 3 enthalten.

...

Patentanmeldung
D 7142/45/50/7251/7336 EP

T a b e l l e  3

Polyvinylacetat-Dispersionen (Beispiele 7 bis 20

| | Vinylacetat Gew.% | Dibutylmaleinat Gew.% | PEG | Gew.% | Nonylphenol-10 EO Sulfat, 30 %ig Gew. % | Entschäumer Gew. % |
|---|---|---|---|---|---|---|
| Beispiel 7 | 44,0 | – | 20000 | 5 | 0,5 | 0,05 |
| Beispiel 8 | 39,0 | – | 20000 | 10 | 0,5 | 0,05 |
| Beispiel 9 | 39,5 | | 20000 | 10 | – | 0,05 |
| Beispiel 10 | 42,2 | – | 20000 | 7 | 0,3 | 0,05 |
| Beispiel 11 | 39,0 | – | 12000 | 10 | 0,5 | 0,05 |
| Beispiel 12 | 39,25 | – | 12000 | 10 | 0,25 | 0,05 |
| Beispiel 13 | 42,2 | – | 20000 | 7 | 0,3 | 0,05 |
| Beispiel 14 | 42,0 | – | 20000 | 7 | 0,5 | 0,05 |
| Beispiel 15 | 34,26 | 17,68 | 20000 | 2,5 | 1,0 | 0,07 |
| Beispiel 16 | 34,55 | 17,80 | 20000 | 2,5 | 0,5 | 0,2 |
| Beispiel 17 | 33,56 | 17,29 | 12000 | 3,5 | 1,0 | 0,2 |
| Beispiel 18 | 33,30 | 17,16 | 12000 | 4,0 | 1,0 | 0,1 |
| Beispiel 19 | 32,64 | 16,81 | 12000 | 5,0 | 1,0 | 0,1 |
| Beispiel 20 | 33,96 | 17,50 | 12000 | 3,0 | 1,0 | 0,1 |

...

## T a b e l l e  3  Forts.

| | Viskosität Brookfield RVT 20 °C / 20 UpM/mPas· | Teilchengröße /nm | Feststoffgehalt /Gew. % |
|---|---|---|---|
| Beispiel  7 | 33000 | 350 | 50 |
| Beispiel  8 | 61000 | 220 | 50 |
| Beispiel  9 | 13750 | 200 | 50 |
| Beispiel 10 | 49000 | 280 | 49,5 |
| Beispiel 11 | 27500 | 184 | 50 |
| Beispiel 12 | 10000 | 187 | 49,4 |
| Beispiel 13 | 190000 | -- | 50 |
| Beispiel 14 | 170000 | -- | 50 |
| Beispiel 15 | 92000 | 620 | 55,3 |
| Beispiel 16 | 25000 | 600 | 56 |
| Beispiel 17 | 56000 | 180 | 56 |
| Beispiel 18 | 80000 | 680 | 56 |
| Beispiel 19 | 158000 | 360 | 56 |
| Beispiel 20 | 38000 | 320 | 55,3 |

Beispiel 21

| Rohstoffklasse | Rohstoff | Einsatzkonzentration | |
| --- | --- | --- | --- |
| | | Gew. % | kg |
| Wasser | | 39,15 | 11,061 |
| Emulgator | Nonylphenol–10–EO Sulfat | 1,00 | 0,999 |
| | NaHCO$_3$ | 0,19 | 0,057 |
| Entschäumer | Nopco 8034 | 0,10 | 0,030 |
| Schutzkolloide | PEG 20000 | 7,00 | 2,100 |
| | Mowiol 4–88 [1] | 5,00 | 1,500 |
| Monomere | Vinylacetat | 26,24 | 7,872 |
| | Dibutylmaleinat | 13,54 | 4,062 |
| Initiator | Kaliumpersulfat | 0,25 | 0,075 |
| Wasser | | 7,5 | 2,250 |

| | |
| --- | --- |
| Viskosität:<br>(Brookfield RVT<br>20°C /20 UpM) | 198000 mPa.s |
| Aussehen:<br>(Film/Glas) | wenig trübe, sehr wenig Stippen |
| Flexibilität: | elastisch |
| Film/Wasser-:<br>verhalten | beständig |
| Teilchengröße: | 270 nm |
| Feststoffgehalt: | 52,4 % |

[1] Polyvinylalkohol der Fa. Hoechst AG,

...

<u>Beispiel 22</u>

| Rohstoffklasse | Rohstoff | Einsatzkonzentration | |
|---|---|---|---|
| | | Gew. % | kg |
| Wasser | | 22,55 | 0,2022 |
| Emulgator | Nonylphenol-10-EO Sulfat | 1,0 | 0,0333 |
| | NA HCO 3 | 0,2 | 0,0020 |
| Entschäumer | Nopco 8034 | 0,2 | 0,0020 |
| Schutzkolloid | Pluronic P105 [1] | 3,5 | 0,0350 |
| Monomere | Vinylacetat | 42,8 | 0,4280 |
| | Dibutylmaleinat | 22,0 | 0,2200 |
| Initiator | Kaliumpersulfat | 0,25 | 0,0025 |
| Wasser | | 7,5 | 0,0750 |

| | |
|---|---|
| Viskosität: (Brookfield RVT 20°C /20 UPM) | 100000 mPa·s |
| Aussehen: (Film/Glas) | klar, sehr wenig Stippen |
| Flexibilität: | elastisch |
| Film/Wasser-: verhalten | beständig |
| Teilchengröße: | ca. 230 nm |
| Feststoffgehalt: | 70,2 % |

[1] Polyol der Firma Wyardate Chemicals Corp. Wyardolle/Michigan USA, Molmasse ca. 6500 g/Mol, Polyoxyethylenanteil 50 %

Patentanmeldung
D 7142/45/50/7251/7336 EP

Henkel KGaA
ZR-FE/Patente

## Beispiel 23

In den Reaktionsbehälter nach b) wurden 693,9 g Wasser vorgelegt und darin 26,6 g Nonylphenol-10-EO Sulfat 30 %ig, 6 g Kaliumpersulfat und 100 g PEG 20000, 30 Minuten unter Rühren bei 85 °C unter Stickstoffatmosphäre gelöst.

Anschließend wurde ein Monomergemisch, bestehend aus 175 g Ethylacrylat und 20 g Acrylsäure innerhalb 2 bis 2,5 Stunden bei 87° bis 89 °C und 140 UpM zugetropft.

Nach einer Nachreaktion von 30 Minuten wurde mit 1,25 g Wasserstoffperoxid in 1,27 g Wasser nachkatalysiert und nach weiteren 30 Minuten Reaktionszeit bei 89 °C mit 26 g Fettalkohol-50-EO gelöst in 27 g Wasser versetzt und 15 Minuten nachgerührt.

Die Dispersion wurde auf 40 °C bei 140 UpM abgekühlt und innerhalb 10 Minuten mit 20 g Ammoniak (25 %ig) neutralisiert.

Nach weiteren 20 Minuten Nachreaktion wurde auf 20 °C abgekühlt und abgefüllt.

...

| Rohstoffklasse | Rohstoff | Einsatzkonzentration | |
|---|---|---|---|
| | | Gew.% | kg |
| Wasser | | 66,76 | 0,6939 |
| Emulgator: | Nonylphenol-10-EO Sulfat | 0,77 | 0,0266 |
| | Fettalkohol 50 EO | 1,25 | 0,0260 |
| Schutzkolloide | PEG 20000 | 9,62 | 0,100 |
| Monomere | Ethylacrylat | 16,84 | 0,175 |
| | Acrylsäure | 1,93 | 0,020 |
| Initiator | Kaliumpersulfat | 0,58 | 0,006 |
| | Wasserstoffperoxid (50 %ig) | 0,058 | 0,00125 |
| Wasser | | 0,265 | 0,027 |
| Neutralisator | Ammoniak (25 %ig) | 1,93 | 0,020 |

Viskosität:              45000 mPas
(Brookfield RVT
20 $^\circ$C/20 UpM)
Aussehen:                leicht trübe, stippenfrei
(Film/Glas)
Flexibilität:            elastisch
Film/$H_2O$:             beständig
Feststoffgehalt:         39,2 %

## Beispiel 24

In den Reaktionsbehälter nach b) wurden 281 g Wasser vorgelegt und darin 45 g Nonylphenol-10 EO sulfat (30 %ig),
0,5 g Kaliumpersulfat und 100 g PEG 20000, 30 Minuten
unter Rühren bei 76 °C unter Stickstoffatmosphäre gelöst.

Anschließend wurde ein Monomergemisch, bestehend aus
218 g Ethylacrylat und 38,7 g Styrol gleichzeitig
mit der Katalysatorlösung, bestehend aus 175 g Wasser,
1 g Kaliumpersulfat, 43,3 g Nonylphenol-10 EO Sulfat
30 %ig und 24,7 g Natriumhydroxid (20 %ig) innerhalb
2 bis 2,5 Stunden bei 87 ° bis 90 °C und 140 UpM zugetropft. Die Nachreaktion fand innerhalb von 30 Minuten
im Temperaturbereich von 87 ° bis 90 °C statt.

Nach Abkühlung auf 25 °C wurde das Produkt abgefüllt.

...

| Rohstoffklasse | Rohstoff | Einsatzkonzentration | |
|---|---|---|---|
| | | Gew.% | kg |
| Wasser | | 55,35 | 0,4535 |
| Emulgator | Nonylphenol-10-EO Sulfat 30 %ig | 0,32 | 0,0883 |
| Schutzkolloide | PEG 20000 | 12,22 | 0,100 |
| Monomere | Ethylacrylat | 26,61 | 0,2180 |
| | Styrol | 4,72 | 0,0387 |
| Initiator | Kaliumpersulfat | 0,18 | 0,0015 |
| Neutralisator | Natriumhydroxid 20 %ig | 0,60 | 0,0247 |

Viskosität: 1 800 000 mPas
(Brookfield RVT     48 000 mPas (1:1 mit $H_2O$ verdünnt)
20 °C/1 UpM)
Aussehen/1:1 mit
Wasser verdünnt: leicht trübe, leicht stippig
(Film/Glas)
Flexibilität: elastisch
Film/$H_2O$: beständig
Feststoffgehalt: 40,7 %

...

## Methoden zur Bestimmung der Dispersionseigenschaften

### Festkörper

Der Festkörper wird mit Hilfe der Mettler-Waage PC 440
und Festkörperaufsatz Mettler CP 12 bei Heizstufe 4 =
ca. 115 °C bei einer Trocknungszeit von 30 Min. bestimmt.

### ph-Wert

Der pH-Wert wird mit einem Seibold-pH-Meßgerät Nr.
6702483 bei 20 °C bestimmt.

### Viskosität Brookfield

Die Viskosität wird im Brookfieldviscosimeter RVT
2-4/20/20 bei 20 °C gemessen.

### Viskosität Epprecht

Die Viskosität wird im Epprecht Viscometer STV mit
Spindel 2 bzw. 3 bei 20 °C gemessen.

### Teilchengröße

Die Teilchengröße wird in einer ca. 1000fachen Verdünnung mit 1 %iger Natriumclorid-Lösung im Coulter-
Nano-Sizer TM bestimmt. Es wird als Teilchengröße der
Mittelwert aus 3 Messungen angegeben.

### Aussehen des Filmes nach Trocknung bei 100 °C

Die Dispersion wird mit einem Erichsen Filmziehgerät,
Modell 288, mit einer Schichtdicke von 80 my auf eine
Glasplatte aufgezogen und 3 Min. bei 100 °C getrocknet.
Nach einer Lagerung von 30 Min. bei Raumtemperatur wird
das Aussehen des Dispersionsfilmes optisch beurteilt.

Eigenschaften des Filmes nach Lagerung in Wasser

Der Dispersionsfilm von 80 ym Naß-Schichtdicke, der
zuvor 30 Min. bei 100 °C im Trockenschrank und anschließend 30 Min. bei Raumtemperatur gelagert wurde,
wird 10 Min. in Wasser mit einer Temperatur von 20 °C
gelegt.

a) Danach wird durch Reiben die Wasserfestigkeit und
b) durch Ziehen des nassen Filmes die Elastizität beurteilt.

## Gebrauchsfähigkeit der Klebstoffmassen nach Lagerung

Die Klebstoffmassen der Beispiele 1 - 24 werden in handelsübliche Kunststoffspender abgepackt, die eine mittels der Greifhand
betätigbare Dosiervorrichtung am Kopf des Behälters mit Abgabeöffnung für den Klebstoff und einen im Ausmaß der Klebstoffabgabe selbsttätig nachrückenden Boden aufweisen.

Die Ausdrückbarkeit der Massen aus dem Spender ist auch nach
Lagerung für den Zeitraum von 180 Tagen bei Raumtemperatur
unverändert. Auch die verschärfte Alterungsprüfung bei 40°C
zeigt, daß die Gebrauchsfähigkeit der Klebstoffgebinde über den
gleichen Zeitraum erhalten bleibt.

. . .

## Beispiel 25

Salbenartig pastöse Klebstoffe auf Basis wäßriger Homo-
und Co-Emulsionspolymerisate des Vinylacetats werden
nach der folgenden Rahmenrezeptur und Herstellvorschrift
hergestellt:

Das jeweils gewählte Schutzkolloid - Hydroxyethylcellulose, Polyvinylalkohol, Carboxymethylcellulose oder Polyvinylpyrrolidon - wird in kaltes demineralisiertes Wasser eingerührt, gewünschtenfalls auf ca. 80$^{o}$C aufgeheizt
und durch hinreichendes Verweilen bei dieser Temperatur
homogenisiert. Getrennt wird eine Initiatorlösung zur
Auslösung der Polymerisationsreaktion durch Auflösen von
Kaliumpersulfat in demineralisiertem Wasser bei ca. 40$^{o}$C
hergestellt.

Die wäßrige, das Schutzkolloid enthaltende Lösung wird
in den Reaktor gegeben und dort mit 150 UpM gerührt. Bei
ca. 75$^{o}$C wird gleichzeitig mit der Monomer- und der
Initiatordosierung begonnen. Beide Komponenten werden
über einen Zeitraum von ca. 3 Stunden zudosiert, wobei
für die Nachreaktion 10 % der Initiatorlösung zurückbehalten werden. Die Initiatorzugabe während der Nachreaktion erfolgt innerhalb von ca. 10 Minuten nach der
letzten Monomerzugabe (Nachreaktionszeit ca. 30 Minuten).
Während der gesamten Polymerisationszeit einschließlich
der Nachreaktion soll die Reaktionstemperatur von 80$^{o}$C
nicht wesentlich überschritten werden.

Die als Reaktionsprodukt anfallenden Dispersionen sind
praktisch stippenfrei und trocknen zu Feststoffilmen auf.
Die Produktviskositäten (Brookfield 20$^{o}$C / 20 UpM) rei-

...

chen in Abhängigkeit von Art und Konzentration des
Schutzkolloids bis in den Bereich von 3 Millionen.

In der nachfolgenden Tabelle sind die Klebstoffe 1 - 3
und 5 Homopolymerisate des Vinylacetats, die Klebstoffe 4 und 6 Copolymerisate aus 2/3 Gew.-Teilen Vinylacetat und 1/3 Gew.-Teil Dibutylmaleinat.

## Tabelle

| | Emulgator | Emulgatormenge Gew.-% | Festkörper Gew.-% | Brookfield-Viskosität |
|---|---|---|---|---|
| 1 | Hydroxyethyl-cellulose | 2,5 | 47 | 65 000 |
| 2 | Hydroxyethyl-cellulose | 3,0 | 50 | 110 000 |
| 3 | Polyvinylalko-hol | 7,0 | 48 | 2 700 000 |
| 4 | Polyvinylalko-hol | 7,0 | 57 | 3 600 000 |
| 5 | Carboxymethyl-cellulose | 5,0 | 50 | 31 500 |
| 6 | Carboxymethyl-cellulose | 4,0 | 51 | 65 800 |

Die salbenartigen Klebstoffmassen werden in einen Verpackungsbehälter eingebracht, der als zylinderische
Kunststoffhülse ausgebildet ist und am unteren Ende ein
kolbenartiges Abschlußelement gleitbar angeordnet enthält. Der Behälter weist weiterhin als Dosiervorrichtung

• • •

ein eindrückbares und nach Freigabe zurückfederndes Teilelement auf, wobei zwischen diesem Teilelement und dem übrigen Innenraum der Kunststoffhülse eine Pumpenkammer angeordnet ist und wobei weiterhin zwischen dieser Pumpenkammer und dem übrigen Innenraum ein Rückschlagventil vorgesehen ist, das beim Eindrücken des Teilelements schließt und beim Zurückfedern desselben öffnet. Die Pumpenkammer ist mit einer permanent offenen Abgabeöffnung am Kopf des Behälters verbunden. Zwischen Pumpenkammer und Abgabeöffnung ist ein weiteres Rückschlagventil angeordnet, das beim Eindrücken des Teilelements sich unter Abgabe des Klebstoffes öffnet und beim Zurückfedern des Teilelements schließt.

Durch Druckbetätigung der mit den Klebstoffen gefüllten Behälter lassen sich genau bestimmbare Mengen des Klebstoffes dosiert austragen.

Die Klebstoffschichten zeichnen sich durch rasche Abbindung und hervorragende Klebfestigkeit aus.

## Patentansprüche

1. Gebrauchsfertiges Klebstoffgebinde, gekennzeichnet durch die Kombination der folgenden Merkmale:

   a) ein Klebstoff auf der Basis salbenartig-pastös eingedickter, weich verstreichbarer, ohne Druckanwendung jedoch nicht fließender Emulsionspolymerisate, die ein mit Schutzkolloiden bzw. Eindickungsmitteln stabilisiertes Homo- und/oder Copolymeres mit Klebstoffcharakter als dispersen Festkörper in wässriger Phase enthalten,

   b) ein den Klebstoff aufnehmender, mit einer Hand greifbarer Behälter mit einer Abgabeöffnung für den Klebstoff und einer Einrichtung zur dosierten Klebstoffabgabe,

   c) eine den mit Klebstoff gefüllten Innenraum des Behälters entsprechend der Abgabe des Klebstoffes derart verringernde Einrichtung, daß die im Behälter verbleibende Klebstoffmasse stets hohlraumfrei und gegen Luftrücktritt gesichert gelagert ist

2. Klebstoffgebinde nach Anspruch 1, dadurch gekennzeichnet, daß als Klebstoff stabilisierte wässrige Emulsionspolymerisate mit Viskositäten (Brookfield RTV, $20^o$ C und 20 Upm) von wenigstens 15.000 mPas, vorzugsweise von wenigstens 50.000 mPas vorliegen, wobei zweckmäßigerweise die Viskosität der eingedickten wässrigen Emulsionspolymerisate nicht über 3 Millionen mPas und insbesondere im Bereich von 50.000 bis 500.000 mPas liegt.

. . .

3. Klebstoffgebinde nach Ansprüche 1 oder 2, dadurch gekennzeichnet, daß im Klebstoff als Eindickungsmittel lagerstabile wasserlösliche und/oder wasserquellbare Polymerverbindungen insbesondere synthetischen Ursprungs vorliegen.

4. Klebstoffgebinde nach Anspruch 1, oder einem der folgenden, dadurch gekennnzeichnet, daß der Klebstoff als Eindickungsmittel praktisch unbegrenzter Lagerstabilität Polyethylenglykol oder Mischpolyether aus Ethylenoxid und Propylenoxid eines mittleren Molekulargewichts von wenigstens 3.000 enthält.

5. Klebstoffgebinde nach Anspruch 1, oder einem der folgenden, dadurch gekennzeichnet, daß als Klebstoff wässrige Emulsionspolymerisate der folgenden Zusammensetzung vorliegen:

| | | |
|---|---|---|
| Polymerfestkörper | ca. | 20 bis 70 Gew.% |
| vorzugsweise | | 35 bis 60 Gew.% |
| Eindickungsmittel | | 0,5 bis 15 Gew.% |
| vorzugsweise | | 2 bis 12 Gew.% |
| Wasser | ca. | 30 bis 75 Gew.% |

sowie gegebenenfalls enthaltend weitere Hilfsstoffe wie Emulgatoren, Thixotropierungsmittel, wassermischbare schwerflüchtige Lösungsmittel, Konservierungsmittel, Weichmacher und dergleichen.

6. Klebstoffgebinde nach Anspruch 1, oder einem der folgenden, dadurch gekennzeichnet, daß als Polymere mit Klebstoffcharakter Homo- und/oder Copolymerisate auf Basis von Vinylestern, insbesondere Vinylacetat, Acrylsäure und/oder Methacrylsäure bzw. ihren Derivaten, insbesondere ihren Estern und/oder Amiden, oder von Dienen vorliegen.

7. Klebstoffgebinde nach Anspruch 1, oder einem der folgenden, dadurch gekennzeichnet, daß als Klebstoff salbenartig-pastöse wäßrige Polymermassen vorliegen, die durch Auftrocknung erhärtende und/oder dauerklebrige drucksensitive Filme ausbilden.

8. Klebstoffgebinde nach Anspruch 1, oder einem der folgenden, dadurch gekennzeichnet, daß als Eindickungsmittel Polyethylenglykole eines mittleren Molekulargewichts von wenigstens 5 000, vorzugsweise mit entsprechenden Werten von etwa 12 000 bis 20 000 vorliegen.

9. Klebstoffgebinde nach Anspruch 8, dadurch gekennzeichnet, daß die Polyethylenglykole in Mengen von wenigstens 3 Gewichtsprozent, vorzugsweise in Mengen von etwa 3 bis 10 Gewichtsprozent - jeweils bezogen auf Emulsionsgesamtgewicht - vorliegen.

10. Klebstoffgebinde nach Ansprüchen 8 oder 9, dadurch gekennzeichnet, daß die Polyethylenglykole in Abmischung mit Polyvinylalkohol vorliegen, wobei wenigstens etwa gleichen Mengen an Polyethylenglykol und Polyvinylalkohol, zweckmäßigerweise aber ein mengenmäßiger Überschuß an Polyethylenglykol vorliegen, der insbesondere im Bereich von etwa 1 bis 2 Gewichtsteile Polyethylenglykol/1 Gewichtsteil Polyvinylalkohol liegen kann.

11. Klebstoffgebinde nach Anspruch 1, oder einem der folgenden, dadurch gekennzeichnet, daß ein Verteilerelement zur verstreichenden Aufbringung des die Abgabeöffnung verlassenden Klebstoffes auf einen zu verklebende Fläche, vorgesehen ist.

. . .

12. Klebstoffgebinde nach Anspruch 1, oder einem der folgenden, gekennzeichnet durch eine mittels der Greifhand betätigbare Dosiervorrichtung zu Abgabe des Klebstoffs.

13. Klebstoffgebinde nach Anspruch 1 oder einem der folgenden dadurch gekennzeichnet, daß das Griffstück als zylindrische Kunstoffhülse (1;17;33) ausgebildet ist, in deren unterem Ende ein kolbenartiges Abschlusselement (2) gleitbar derart angeordnet ist, daß dieses sich infolge des beim Betätigen der Dosiervorrichtung erzeugten Vakuums im Inneren der zylindrischen Kunstoffhülse selbsttätig in Richtung der Dosiervorrichtung am Kopf der zylindrischen Kunststoffhülse bewegt.

14. Klebstoffgebinde nach Anspruch 1 oder einem der folgenden, dadurch gekennzeichnet, daß die Abgabeöffnung als permanente Öffnung (24; 36) ausgebildet ist, die mittels einer auch die Dosiervorrichtung umgebenden Abschlußkappe (25; 37) verschließbar ist.

15. Klebstoffgebinde nach Anspruch 1 oder einem der folgenden, dadurch gekennzeichnet, daß der Behälter als Wasserdampfdiffusionsfeste Kunstoff- oder Metallhülse ausgebildet ist.

16. Klebstoffgebinde nach Anspruch 1 oder einem der Ansprüche 2 - 12, dadurch gekennzeichnet, daß der Behälter als doppelwandige Tube mit einem Außenmantel aus elastisch verformbaren Material und einem darin gelagerten, luft- und wasserdichten bleibend bzw. unelastisch verformbaren Folienbeutel zur Aufnahme des Klebstoffs ausgebildet ist und daß in dem elastisch verformbaren Außenmantel mindestens eine Lüftungsöffnung vorgesehen ist.

17. Verwendung von salbenartig-pastös eingestellten, weich verstreichbaren, ohne Druckanwendung jedoch nicht

. . .

fließenden Emulsionspolymerisaten, die ein mit Eindickungsmitteln stabilisiertes Homo- und/oder Copolymeres mit Klebstoffcharakter als dispersen Festkörper in wäßriger Phase enthalten, in griffartig ausgebildeten Kunststoffbehältern mit Kopfstück, enthaltend eine Abgabeöffnung, eine druckgesteuerte, mit der Greifhand zu betätigende Dosiereinrichtung und ein Verteilerelement für den ausgedrückten Anteil des Emulsionspolymerisats als gebrauchsfertiges Einhand-Klebstoffgebinde.

18. Ausführungsform nach Anspruch 17, gekennzeichnet durch die Verwendung von Polyethylenglykolen eines mittleren Molekulargewichts von wenigstens 3000 als lagerbeständiges, nicht nachdickendes Eindickungsmittel.

19. Ausführungsform nach Ansprüchen 17 und 18, dadurch gekennzeichnet, daß Polyethylenglykole eines mittleren Molekurlargewichts von wenigsten 5 000 bis 35 000 vorzugsweise mit entsprechenden Werten von etwa 12 000 bis 20 000 verwendet werden.

20. Ausführungsform nach Ansprüchen 17 bis 19, dadurch gekennzeichnet, daß die Polyethylenglykole in Mengen von wenigstens 3 Gewichtsprozent, vorzugsweise in Mengen von etwa 3 bis 10 Gewichtsprozent - jeweils bezogen auf Emulsionsgesamtgewicht - vorliegen.

. . .

Fig. 1

Fig. 2

Fig.3

0169501

*Fig. 4*

*Fig. 5*

*Fig. 6*

**FIG. 7**

B →

31a
32
23
20
19a
17

**FIG. 8**

20
19a
31a
32
17

*Fig. 9*

*Fig. 10*